# EUROPEAN PATENT APPLICATION

(11) **EP 4 697 268 A1**
(43) Date of publication of application: **18.02.2026**
(21) Application number: 23933098.8
(22) Date of filing: 23.10.2023
(51) Int. Cl.: G06T 7/70, G06T 5/00, G06T 15/50, H04N 23/60

(54) **INFORMATION PROCESSING DEVICE, INFORMATION PROCESSING METHOD, AND PROGRAM**

(30) Priority: 10.04.2023 JP 2023063534
(71) Applicant: Sony Group Corporation, Tokyo 108-0075 (JP)
(72) Inventor: SAKAGAMI, Junichi, Tokyo 108-0075 (JP); WAKAZONO, Masafumi, Tokyo 108-0075 (JP); NISHIO, Takaaki, Tokyo 108-0075 (JP)
(74) Representative: MFG Patentanwälte Meyer-Wildhagen Meggle-Freund Gerhard PartG mbB
(86) International application number: PCT/JP2023/038149
(87) International publication number: WO 2024/214323

(57) **Abstract**

An information processing apparatus includes: a normal vector calculation unit that calculates, on the basis of a captured image, a normal vector at a shininess center located at the center of a shiny area that is an area on a subject and is a bright area reflecting light from a light source; and a light source location specifying unit that specifies, on the basis of the normal vector, a light source direction that is a direction in which the light source is located.

## Description

### TECHNICAL FIELD

The present technology relates to technologies of an information processing apparatus, an information processing method, and a program that perform various types of processing on an image.

### BACKGROUND ART

There is a case where various types of processing are performed on a captured image. For example, backlight correction is one of the types, but in this case, it is important to appropriately estimate a direction in which a light source at the time of imaging is located.

Patent Document 1 below discloses a technology for estimating from which direction an environmental light source is emitted.

### CITATION LIST

### PATENT DOCUMENT

Patent Document 1: Japanese Patent Application Laid-Open No. 2017-147658

### SUMMARY OF THE INVENTION

### PROBLEMS TO BE SOLVED BY THE INVENTION

However, in the method described in Patent Document 1, a light incident direction is determined from shade of a face, and for example, there is a possibility that the light incident direction is erroneously determined only by hair hanging over the face swaying.

The present technology has been made in view of such a problem, and an object thereof is to more accurately estimate a light source location.

### SOLUTIONS TO PROBLEMS

An information processing apparatus according to the present technology includes: a normal vector calculation unit that calculates, on the basis of a captured image, a normal vector at a shininess center located at the center of a shiny area that is an area on a subject and is a bright area reflecting light from a light source; and a light source location specifying unit that specifies, on the basis of the normal vector, a light source direction that is a direction in which the light source is located.

For example, the light source direction with respect to the subject can be specified on the basis of a positional relationship between an imaging device that images the subject and the shininess center, and the normal vector.

### BRIEF DESCRIPTION OF DRAWINGS

Fig. 1 is a diagram illustrating a device configuration at the time of imaging a subject in an embodiment of the present technology.
Fig. 2 is a block diagram illustrating a configuration example of an imaging device.
Fig. 3 is a block diagram illustrating a configuration example of an information processing apparatus.
Fig. 4 is a block diagram illustrating an example of a functional configuration of an information processing apparatus.
Fig. 5 is a diagram illustrating an example in which a shiny area due to the sun occurs in an imaging environment.
Fig. 6 is a diagram illustrating an example of a shiny area generated on the head of a person in an imaging environment.
Fig. 7 is a diagram illustrating an example of a shiny area generated on a plane.
Fig. 8 is a diagram illustrating an example of a shiny area generated on a sphere.
Fig. 9 is a diagram illustrating a state in which a normal vector differs depending on the size of the sphere together with Fig. 10.
Fig. 10 is a diagram illustrating a state in which the normal vector differs depending on the size of the sphere together with Fig. 9.
Fig. 11 is a diagram illustrating an example of a shiny area generated on a cylindrical shape.
Fig. 12 is a diagram illustrating an example of calculating a light source direction on the basis of a shiny area generated on a plane.
Fig. 13 is a diagram illustrating an example of specifying a light source location on the basis of a plurality of light source directions.
Fig. 14 is a flowchart illustrating an example of processing executed by the information processing apparatus to specify the light source location.
Fig. 15 is a flowchart illustrating an example of subroutine processing for specifying a recalculation target.
Fig. 16 is a flowchart illustrating an example of subroutine processing for specifying the light source location.
Fig. 17 is a flowchart illustrating an example of the subroutine processing for specifying the recalculation target in a case where the sun is considered.
Fig. 18 is a flowchart illustrating an example of processing in a modification for specifying the light source location.
Fig. 19 is a diagram for explaining effect processing of adding catch light to the eyes of a person.
Fig. 20 is a diagram for explaining effect processing of adding motion blur or a catch light bright line.
Fig. 21 is a diagram for explaining various types of processing performed on an AI-generated subject.
Fig. 22 is a diagram for explaining effect processing on particles.
Fig. 23 is a block diagram illustrating an example of a functional configuration of an effect processing unit.
Fig. 24 is a flowchart illustrating an example of the effect processing together with Fig. 25.
Fig. 25 is a flowchart illustrating an example of the effect processing together with Fig. 24.
Fig. 26 is a flowchart illustrating another example of the effect processing together with Fig. 24.
Fig. 27 is a diagram for explaining discomfort in a case where a 3D avatar is superimposed.
Fig. 28 is a diagram illustrating an example in which the 3D avatar is superimposed on which the effect processing has been applied so that discomfort does not occur.
Fig. 29 is a block diagram illustrating another example of the functional configuration of the effect processing unit.
Fig. 30 is a diagram illustrating an example of superimposing the 3D avatar on which bokeh processing has been performed.
Fig. 31 is an explanatory diagram for thresholds used for the bokeh processing.
Fig. 32 is a flowchart illustrating an example of processing executed by the effect processing unit that superimposes the 3D avatar.
Fig. 33 is a flowchart illustrating an example of subroutine processing for recalculation processing.

### MODE FOR CARRYING OUT THE INVENTION

Hereinafter, an embodiment will be described in the following order.
<1. Estimation of light source location>
<2. Device configuration>
<3. Configuration of information processing apparatus>
<4. Functional configuration of information processing apparatus>
<5. Processing flow>
<6. Modification in light source location estimation>
<7. First example of effect processing based on light source location>
   <7-1. Mode of effect processing>
   <7-2. Functional configuration>
   <7-3. Processing example>
<8. Second example of effect processing based on light source location>
   <8-1. Mode of effect processing>
   <8-2. Functional configuration>
   <8-3. Processing example>
<9. Modifications>
<10. Conclusion>
<11. Present technology>
<12. Others>
   <12-1. First example>
   <12-2. Second example>

### <1. Estimation of light source location>

In video production of music videos and the like, post-production is used for performing image processing for adding various effects to an image after imaging.

Examples of the processing of adding an effect in post-production include processing of adding catch light CL to make the eyes of a person as a subject look lively, processing of adding motion blur to make movement of a person as a subject look dynamic, and the like. In particular, in a case where the subject is generated by generative artificial intelligence (AI), a contour and the like are clear even if a frame image is cut out at any timing, and thus an effect is added such as motion blur according to movement of each of parts of the subject, whereby a natural image can be obtained.

Furthermore, in addition to addition of an effect to an image, various types of correction processing such as backlight correction each are also important processing for image creation.

In such various types of processing, it is important to appropriately specify a direction in which a light source is located (hereinafter, referred to as a "light source direction LD") and a location of the light source (hereinafter, referred to as a "light source location LL") at the time of imaging.

By appropriately specifying the light source direction LD and the light source location LL, for example, it is possible to appropriately perform addition of the catch light CL to an appropriate position of the eyeball, and backlight correction. That is, by appropriately specifying the light source direction LD and the light source location LL, it is possible to appropriately use visual effects (VFX) technology.

### <2. Device configuration>

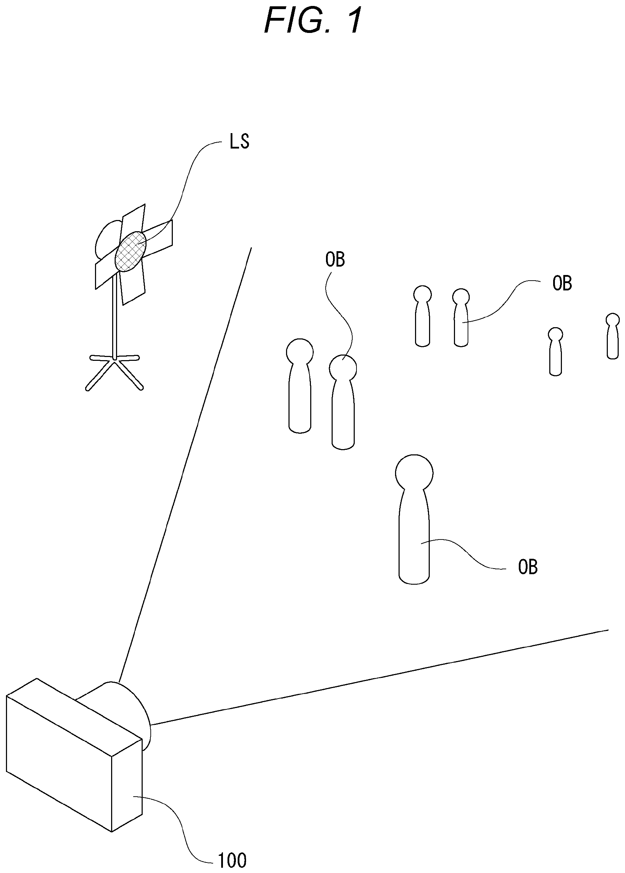

As illustrated in Fig. 1, various captured images, metadata, and the like obtained for subjects OB by use of an imaging device 100 are used for specification of the light source direction LD and the light source location LL.

Note that the term "captured image" as used herein refers to a moving image or a still image captured by an image sensor, or data constituting these images. The captured image also includes an image to be recorded on a recording medium or an image to be displayed on a monitor as a through image or the like.

The captured image may be RAW data itself obtained by the image sensor, or may be an image subjected to various types of signal processing such as defect correction and noise reduction.

Furthermore, the "subject" may include not only a person, an animal, and a vehicle but also a wall, a floor, a ground, a ceiling, and the like.

As illustrated in Fig. 1, there may be a light source such as a projector or a light source such as the sun at an imaging site for the subjects OB. In the following description, these light sources will be referred to as light sources LS without distinction.

In a case where the sun is particularly referred to among the light sources LS, the light source is described as the sun LSs.

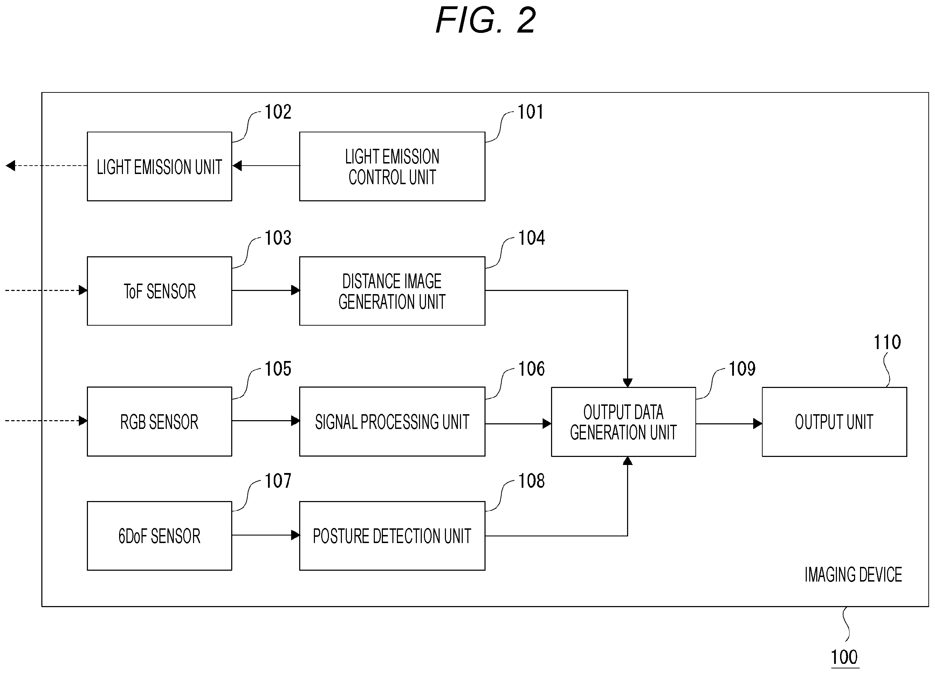

Fig. 2 illustrates a configuration of the imaging device 100.

The imaging device 100 includes a light emission control unit 101, a light emission unit 102, a time of flight (ToF) sensor 103, a distance image generation unit 104, an RGB sensor 105, a signal processing unit 106, a 6DoF sensor 107, a posture detection unit 108, an output data generation unit 109, and an output unit 110.

The light emission control unit 101, the light emission unit 102, the ToF sensor 103, and the distance image generation unit 104 are units provided to generate a distance image by an indirect ToF (iToF) method or a direct ToF (dToF) method.

The light emission control unit 101 determines a light emission timing of infrared light by the light emission unit 102 and supplies information of the light emission timing to the ToF sensor 103 and the distance image generation unit 104.

The light emission unit 102 performs pulse light emission of the infrared light on the basis of a light emission signal from the light emission control unit 101.

The ToF sensor 103 includes two-dimensionally arranged light receiving elements that receive the infrared light emitted from the light emission unit 102 and reflected by each subject OB.

From each pixel included in the ToF sensor 103, a signal corresponding to reception of the infrared light is supplied to the distance image generation unit 104 in the subsequent stage.

The distance image generation unit 104 generates a distance image in which a time from emission from the light emission unit 102 to reception by the light receiving elements of the ToF sensor 103 is represented by a color shade or difference in color.

For example, in the distance image, a pixel for which the imaging device 100 is closer to the subject OB is displayed in red, and a pixel for which the imaging device 100 is farther from the subject OB is displayed in blue. Note that this display mode is merely one mode for visually displaying the distance image, and may be displayed in black and white shading or may be displayed as a numerical value.

The imaging device 100 controls operation timings of the light emission control unit 101, the light emission unit 102, the ToF sensor 103, and the distance image generation unit 104 by, for example, a control unit (not illustrated).

The RGB sensor 105 includes, for example, a pixel array unit in which pixels having sensitivity to red (R) light, pixels having sensitivity to green (G) light, and pixels having sensitivity to blue (B) light are arranged in a predetermined manner such as a Bayer array.

Note that the RGB sensor 105 is merely a form of a color sensor, and pixels having sensitivity to cyan (Cy) light, pixels having sensitivity to magenta (Mg) light, and pixels having sensitivity to yellow (Y) light may be arranged in a predetermined manner, or may include white (W) pixels or other pixels. Furthermore, a monochrome sensor may be used instead of the color sensor such as the RGB sensor 105. Moreover, the ToF 103 may be substituted for the color sensor such as the RGB sensor 105 by being driven in an intensity mode (light intensity).

The signal processing unit 106 generates a color image (RGB image) on the basis of pixel signals for respective pixels output from the RGB sensor 105. The signal processing unit 106 performs various types of signal processing for generating the color image. Various types of signal processing include, for example, defect correction processing, noise reduction processing, automatic white balance (AWB) processing, gamma correction processing, and the like.

The 6DoF sensor 107 is an inertial measurement unit (IMU) or the like that detects and outputs acceleration and angular velocity for three axes orthogonal to each other.

The posture detection unit 108 detects a posture of the imaging device 100, a change of the posture, or an amount of movement on the basis of an output signal of the 6DoF sensor 107.

The output data generation unit 109 converts the distance image output from the distance image generation unit 104, the color image output from the signal processing unit 106, and posture information output from the posture detection unit 108 into a predetermined data format.

For example, the output data generation unit 109 performs data generation such that additional information regarding imaging such as an imaging time and posture information of each of the distance image and the color image is associated with each image. These pieces of additional information may be included in each image as metadata.

Note that, in the following description, the distance image and the color image may be collectively referred to as "captured image".

The output unit 110 outputs the captured image and additional data generated by the output data generation unit 109 to the outside of the imaging device 100. The output unit 110 may be provided as, for example, a communication unit.

### <3. Configuration of information processing apparatus>

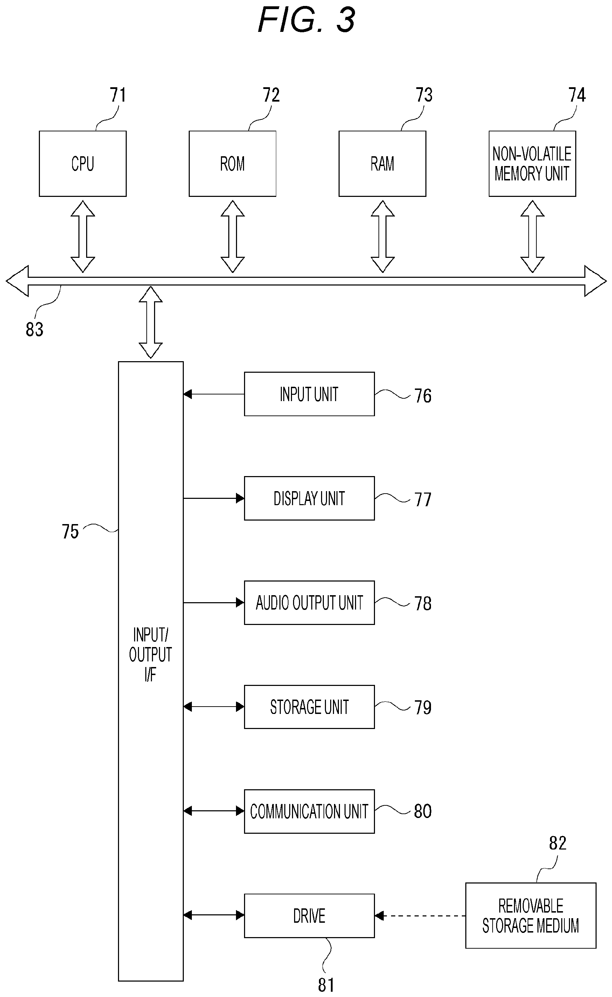

With reference to Fig. 3, a configuration example will be described of an information processing apparatus 1 for specifying the light source direction LD and the light source location LL in the captured image.

As illustrated in Fig. 3, the information processing apparatus 1 is a computer apparatus including a central processing unit (CPU) 71. The CPU 71 executes various types of processing according to a program stored in a non-volatile memory unit 74 such as a read only memory (ROM) 72 or an electrically erasable programmable read-only memory (EEP-ROM), or a program loaded from a storage unit 79 to a random access memory (RAM) 73. The RAM 73 also stores, as appropriate, data and the like necessary for the CPU 71 to execute the various types of processing.

The program here may include a program for specifying a positional relationship between the subject OB and the light source LS at the time of imaging on the basis of the captured image, and the like.

The CPU 71, the ROM 72, the RAM 73, and the non-volatile memory unit 74 are connected to one another via a bus 83. An input/output interface (I/F) 75 is also connected to the bus 83.

An input unit 76 including an operation element or an operation device is connected to the input/output interface 75.

For example, as the input unit 76, various operation elements and operation devices are assumed such as a keyboard, a mouse, a key, a dial, a touch panel, a touch pad, or a remote controller.

Operation by a user U is detected by the input unit 76, and a signal corresponding to the input operation is interpreted by the CPU 71.

Furthermore, a display unit 77 including an LCD, an organic EL panel, or the like, and an audio output unit 78 including a speaker or the like are integrally or separately connected to the input/output interface 75.

The display unit 77 is a display unit that performs various types of display, and includes, for example, a display device provided in a housing of the computer apparatus, a separate display device connected to the computer apparatus, or the like.

The display unit 77 executes display of an image for various types of image processing, a moving image to be processed, or the like on a display screen on the basis of an instruction from the CPU 71. Furthermore, the display unit 77 performs display of various operation menus, icons, messages, and the like, that is, display as a graphical user interface (GUI) on the basis of an instruction from the CPU 71. As a result, for example, GUI display for performing various types of image processing using a dedicated application for post-production is performed on the display unit 77.

There is also a case where the storage unit 79 including a hard disk, a solid-state memory, or the like, and a communication unit 80 including a modem or the like are connected to the input/output interface 75.

The communication unit 80 performs communication processing via a transmission path such as the Internet, wired/wireless communication with various devices, and communication based on bus communication or the like. The communication unit 80 communicates with the imaging device 100, whereby the information processing apparatus 1 can obtain various data used for various types of processing to be described later from the imaging device 100.

A drive 81 is also connected to the input/output interface 75 as needed, and a removable storage medium 82 is mounted such as a magnetic disk, an optical disc, a magneto-optical disk, or a semiconductor memory.

A data file and the like such as a program used for each type of processing can be read from the removable storage medium 82 by the drive 81. The read data file is stored in the storage unit 79, and images and sounds included in the data file are output by the display unit 77 and the audio output unit 78. Furthermore, a computer program and the like read from the removable storage medium 82 are installed in the storage unit 79 as needed.

In the information processing apparatus 1, for example, software for the processing in the present embodiment can be installed through network communication by the communication unit 80, or the removable storage medium 82. Alternatively, the software may be stored in advance in the ROM 72, the storage unit 79, or the like.

The CPU 71 performs processing operations on the basis of various programs, whereby arithmetic processing and communication processing described later are executed.

Note that the information processing apparatus 1 is not limited to including a single computer apparatus as illustrated in Fig. 3, and may include a plurality of computer apparatuses systematized. The plurality of computer apparatuses may be systematized by a local area network (LAN) or the like, or may be arranged in a remote place by a virtual private network (VPN) or the like using the Internet or the like. The plurality of computer apparatuses may include a computer apparatus as a server group (cloud) that can be used by a cloud computing service.

### <4. Functional configuration of information processing apparatus>

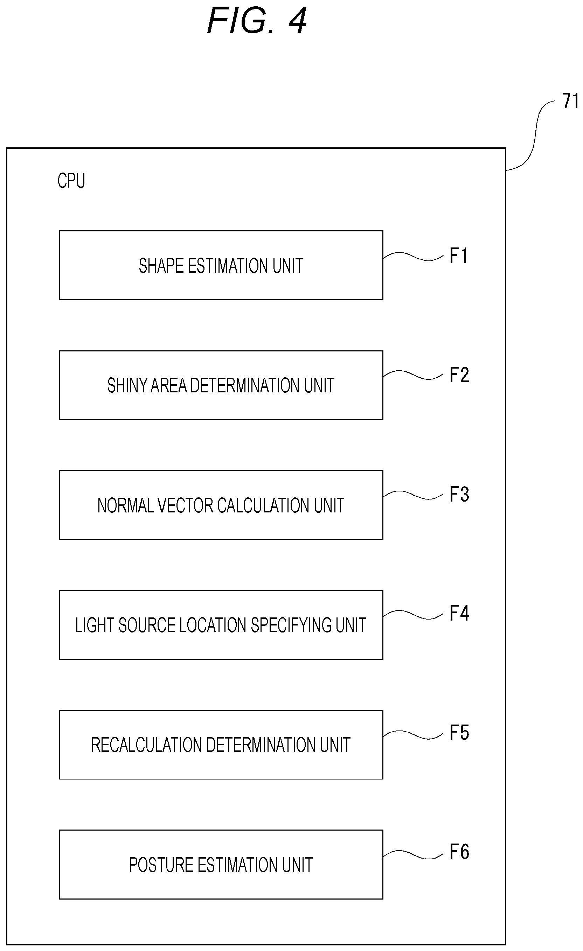

The information processing apparatus 1 has a function for specifying the light source direction LD and the light source location LL by the CPU 71 executing a program. Fig. 4 illustrates an example of a functional configuration of the information processing apparatus 1.

The CPU 71 of the information processing apparatus 1 functions as a shape estimation unit F1, a shiny area determination unit F2, a normal vector calculation unit F3, a light source location specifying unit F4, a recalculation determination unit F5, and a posture estimation unit F6.

The shape estimation unit F1 performs processing of estimating a schematic shape for each subject OB. The shape estimation unit F1 performs, for example, semantic segmentation using an AI model, and performs object recognition for the subject OB.

The shape estimation unit F1 estimates a schematic shape for each subject OB according to a processing result of the semantic segmentation. For example, the shape estimation unit F1 estimates that the shape is a sphere in the case of a human head, and estimates that the shape is a cylindrical shape in the case of a human arm or foot. Furthermore, in a case where a wall, a ground, or a ceiling is recognized, the shape estimation unit F1 estimates the shape as a plane.

The shape estimation unit F1 may be understood to perform processing of determining whether the shape of the subject OB corresponds to a sphere, a cylindrical shape, a plane, or a cone.

The shiny area determination unit F2 determines a high luminance area in the subject OB as a shiny area ArS (bright area). Here, the shiny area ArS indicates an area where light from the light source LS such as a light emitting diode (LED) or the sun LSs is strongly reflected.

The shiny area determination unit F2 may determine an area that is brighter than the peripheral area and has a luminance value greater than or equal to a predetermined value as the shiny area ArS.

Moreover, the shiny area determination unit F2 may determine, as the shiny area ArS, an area that is a bright area among color temperatures close to a color temperature of the light source LS and has a luminance value greater than or equal to a predetermined value.

Furthermore, an area may be determined as the shiny area ArS, the area being a bright area among pieces of blinking close to blinking of the light source LS and having a luminance value greater than or equal to a predetermined value.

Note that, for the color temperature and blinking of the light source LS, a color temperature and blinking of lighting or a strobe that can be preset may be referred to, or synchronization may be performed.

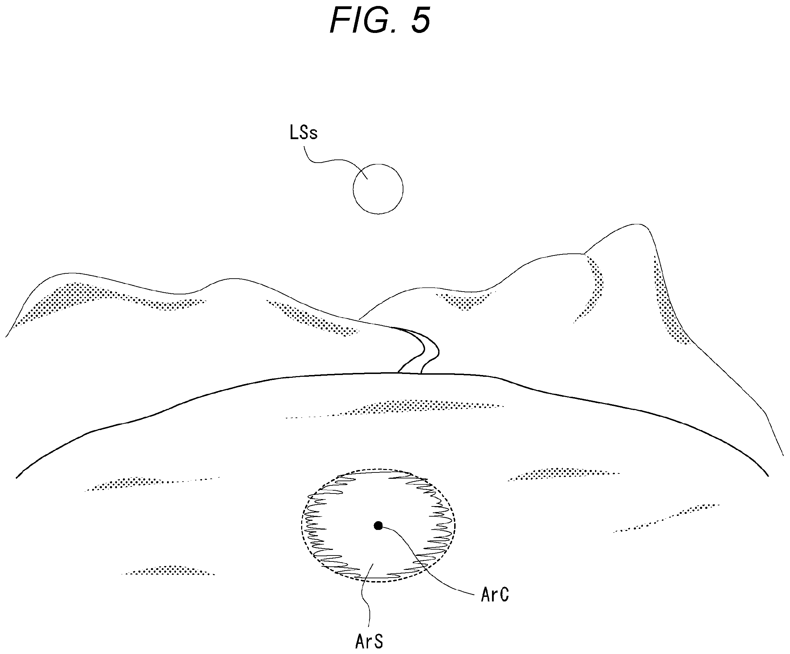

Fig. 5 illustrates an example of the shiny area ArS. Fig. 5 is a captured image of a landscape, and a mountain, a lake, and the sun LSs are the subjects OB.

In the lake, there is an area that strongly reflects the light of the sun LSs, and the shiny area determination unit F2 determines the area as the shiny area ArS.

Note that the example illustrated in Fig. 5 illustrates an example in which irradiation light from the light source LS (sun LSs) is specularly reflected.

The shiny area determination unit F2 further determines a center position in the determined shiny area ArS as a shininess center ArC. In the example illustrated in Fig. 5, the shiny area determination unit F2 approximates the shiny area ArS with a circle indicated by a broken line in the figure, and determines the center of the circle as the shininess center ArC.

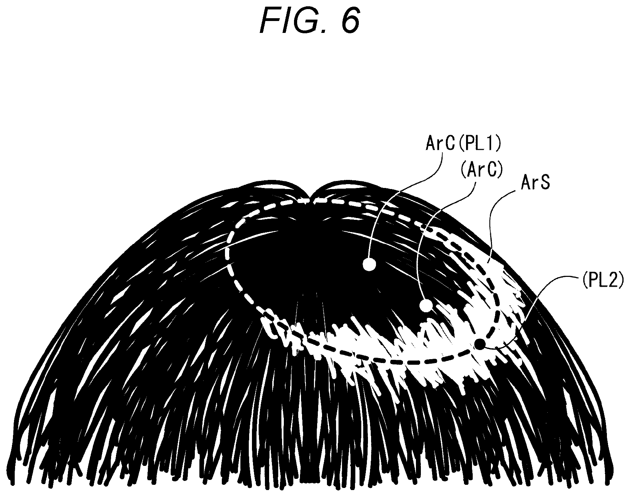

Note that the shiny area ArS cannot necessarily be approximated by a circle or an ellipse. For example, depending on the shape of the subject OB, the irradiation light from the light source LS may form anisotropic reflection. Fig. 6 illustrates an example of the anisotropic reflection.

The anisotropic reflection occurs on the subject OB or the like subjected to streaky processing extending in a certain direction, and a bright area where reflection from the light source LS occurs is formed in an arc shape. In a case where the subject OB is a person, the anisotropic reflection occurs in the head having hair.

Fig. 6 illustrates a state in which irradiation light from the light source LS is reflected on the head of a person as the subject OB. The shiny area ArS, which is a bright area in the head, is a shape that forms a part of an arc of a circle (or an ellipse).

The shiny area determination unit F2 estimates an ellipse indicated by a dotted line in Fig. 6, and determines a center position of the ellipse, a midpoint of a distance (arc) from one end point to the other end point of the arc, or a midpoint of a line segment connecting the end points of the arc to each other by a straight line as the shininess center ArC.

For example, the shiny area determination unit F2 determines the head of a person having hair on the basis of the result of the semantic segmentation, approximates a bright area with an arc, and then determines the shiny area ArS and the shininess center ArC.

That is, in a case where it is estimated that specular reflection of a circular light source is dominant, the center of the circular shiny area ArS may be estimated as the shininess center ArC, and in a case where it is estimated that anisotropic reflection of a point light source is dominant, the shininess center ArC is estimated on the basis of the shiny area ArS approximated by an arc.

Then, in a case where estimation is performed as the middle between the specular reflection and the anisotropic reflection, as indicated in writing in parentheses in Fig. 6, the shininess center ArC estimated as the center of the circular shiny area ArS may be set as a first point PL1, the shininess center ArC obtained by approximation of the area ArS with an arc may be set as a second point PL2, and a midpoint between the first point PL1 and the second point PL2 may be estimated as the shininess center ArC.

Note that the shiny area determination unit F2 may determine the shiny area ArS and the shininess center ArC by machine learning using an AI model.

As will be described later, it is desirable that the shiny area determination unit F2 determines a plurality of the shiny areas ArS and the shininess centers ArC on the basis of a plurality of bright areas.

The normal vector calculation unit F3 calculates a normal vector NV at the shininess center ArC. The normal vector NV is a vector extending in the vertical direction from the shininess center ArC in the subject OB.

A calculation procedure of the normal vector NV will be described with a specific example.

In the calculation of the normal vector NV, the normal vector calculation unit F3 sets three points P1, P2, and P3 near the shininess center ArC. It is desirable that the three points P1, P2, and P3 are selected so that the shininess center ArC is located in a triangular area having each point as a vertex.

The normal vector calculation unit F3 calculates distances d1, d2, and d3 from the imaging device 100 to the points P1, P2, and P3 at the time of imaging. The distances d1, d2, and d3 can be acquired from the distance image.

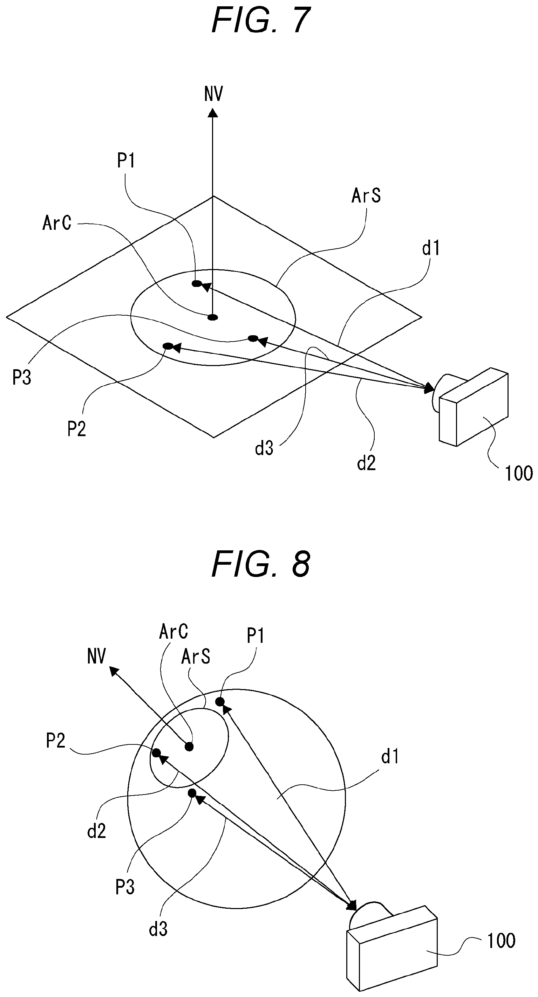

The normal vector calculation unit F3 further uses a shape estimation result for the subject OB. Fig. 7 illustrates an example of a case where the shiny area ArS in the subject OB is a plane.

The normal vector calculation unit F3 calculates an orientation of a plane including the shininess center ArC on the basis of the distances d1, d2, and d3. A vector representing the orientation is the normal vector NV. For example, the normal vector NV can be calculated by calculation of an outer product of a vector V1 from the point P1 to the point P2 and a vector V2 from the point P1 to the point P3.

Next, Fig. 8 illustrates an example of a case where the shiny area ArS of the subject OB is located on the surface of a sphere.

In a case where the shape estimation unit F1 estimates that the subject OB is a sphere, the shape estimation unit F1 also estimates the size of the sphere. The normal vector calculation unit F3 defines the shape of a sphere to cause each of the points P1, P2, and P3 to be located on the surface on the basis of the size of the subject OB estimated by the shape estimation unit F1, sets the shininess center ArC on the surface of the sphere, and calculates the normal vector NV at the shininess center ArC.

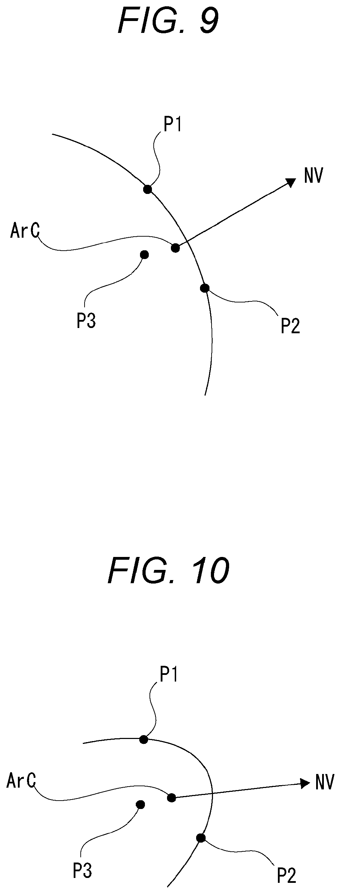

For example, as illustrated in Figs. 9 and 10, in a case where the estimated sizes of the spheres are different from each other even if positions of the points P1, P2, and P3 and the distances d1, d2, and d3 are the same, the normal vector NV may differ.

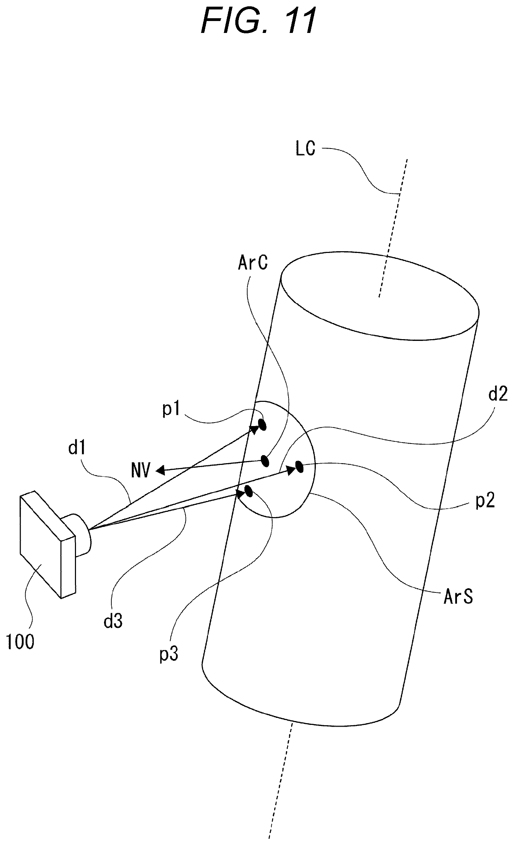

Finally, Fig. 11 illustrates an example of a case where the shiny area ArS of the subject OB is located on the side surface of a cylindrical shape.

In a case where the shape estimation unit F1 estimates that the subject OB has a cylindrical shape, the shape estimation unit F1 estimates the size (diameter length) and orientation (orientation of a center line LC) of the cylindrical shape.

The normal vector calculation unit F3 defines a cylindrical shape to cause each of the points P1, P2, and P3 to be located on the surface on the basis of the size and the orientation of the subject OB estimated by the shape estimation unit F1, sets the shininess center ArC on the surface of the cylindrical shape, and calculates the normal vector NV.

The light source location specifying unit F4 specifies a direction in which the light source LS is present as the light source direction LD on the basis of a positional relationship between the shininess center ArC and the imaging device 100 at the time of imaging, and the normal vector NV. The light source direction LD specified here is a direction in which the light source LS is located when viewed from the shininess center ArC.

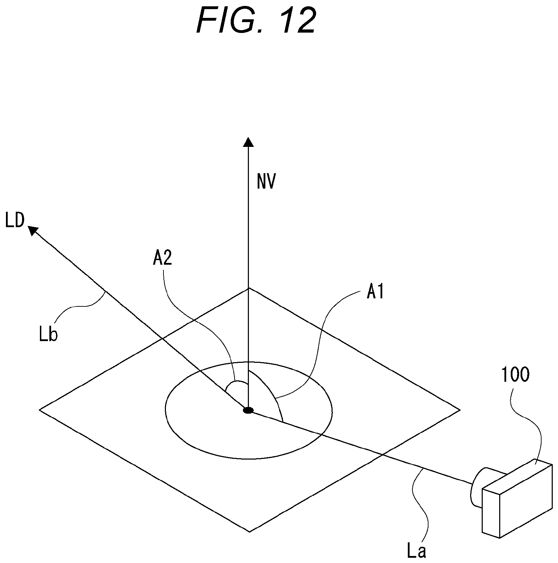

Fig. 12 illustrates a calculation example of the light source direction LD in a case where the shininess center ArC is located on a plane. As illustrated, a line segment Lb is obtained so that an angle A1 and an angle A2 have the same angle, the angle A1 being formed by a line segment La connecting the imaging device 100 and the shininess center ArC to each other and the normal vector NV, the angle A2 being formed by a line segment Lb connecting the shininess center ArC and the light source LS to each other and the normal vector NV. Furthermore, the line segment Lb is present on the same plane as a plane on which the line segment La and the normal vector NV are present.

By specifying the line segment Lb satisfying such a condition, it is possible to specify the light source direction LD.

The light source location specifying unit F4 calculates the normal vector NV for each of the shiny areas ArS determined by the shiny area determination unit F2. In a case where there is only one shiny area ArS, the light source location specifying unit F4 only calculates one light source direction LD to specify the direction in which the light source LS is located.

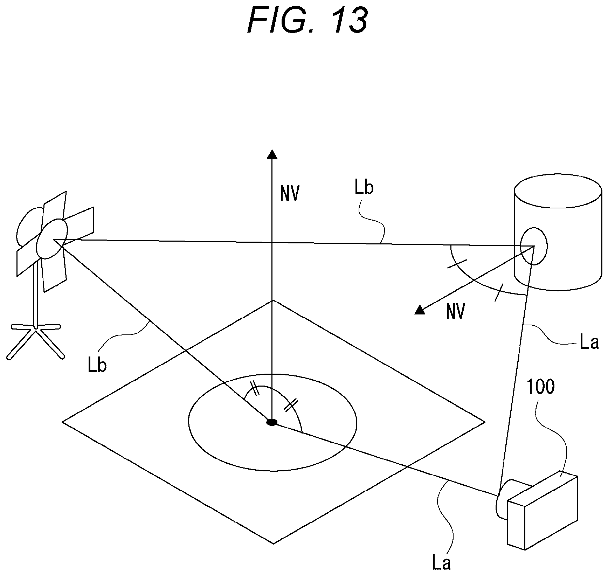

Furthermore, in a case where it is determined that there is the plurality of shiny areas ArS, the light source location specifying unit F4 calculates an intersection location of the plurality of light source directions LD to specify the intersection location as the light source location LL that is a location of the light source LS in a three-dimensional space (see Fig. 13).

Note that, in a case where there are three or more shiny areas ArS, the normal vectors NV in all the shiny areas ArS may be calculated, and the light source location LL may be specified from the three or more normal vectors NV. Furthermore, the normal vectors NV in two shiny areas ArS selected from all the shiny areas ArS may be calculated, and the light source location LL may be specified from the two normal vectors NV.

Note that accuracy of the normal vectors NV calculated from three or more shiny areas ArS may be considered. It may be assumed that the accuracy of the normal vector NV is, for example, the highest when calculated according to the shiny area ArS formed on a plane, and the lowest when calculated according to the shiny area ArS formed in a circle or an ellipse.

By using the high-accuracy normal vector NV, it is possible to estimate the light source location LL with high accuracy.

Furthermore, the accuracy of the normal vector NV may be estimated by use of a classification result of the subject OB by the semantic segmentation. For example, it may be assumed that even if the normal vector NV is calculated according to the shiny area ArS formed on the subject OB having the same cylindrical shape, the normal vector NV in the shiny area ArS formed on an inorganic substance such as a pillar has high accuracy, and the normal vector NV in the shiny area ArS formed on an organism such as a human arm or foot has low accuracy.

Furthermore, the accuracy of the normal vector NV may be estimated by use of a specular reflectance estimated on the basis of a relationship between a luminance distribution and a specular reflectance of an object surface.

For example, it may be assumed that even if the normal vector NV is calculated according to the shiny area ArS formed on the subject OB having the same cylindrical shape, the normal vector NV in the shiny area ArS formed on the object having a high specular reflectance has high accuracy, and the normal vector NV in the shiny area ArS formed on the object having a low specular reflectance has low accuracy.

As understood from the above, the light source location specifying unit F4 can specify the light source location LL without depending on a change in the subject OB by performing ray tracing using the calculated normal vector NV.

The recalculation determination unit F5 determines whether or not to perform recalculation for the calculation of the normal vector NV and the specification of the light source direction LD (or the light source location LL) in a case where a subject image Go, which is an image of an area where the subject OB is imaged on a captured image and is a partial image, has changed from that of a previous frame. That is, the recalculation determination unit F5 determines whether or not it is necessary to discard the light source direction LD and the light source location LL calculated for the previous frame and perform recalculation for a current frame again.

Some examples will be given of a case where the subject image Go changes.

The first case is a case where a position of the subject OB on the captured image changes. The case where the position of the subject OB on the captured image changes is, for example, a case where the subject OB is moving, a case where a location or an orientation of the imaging device 100 has changed, or the like.

The second case is a case where the position (center position) of the subject OB on the captured image does not change and the size has changed. This may occur in a case where the subject OB has moved toward the imaging device 100, or the like.

The recalculation determination unit F5 performs recalculation of the light source direction LD or the light source location LL for the light source LS according to these changes in the subject image Go.

For example, in a case where the subject OB is moving, the recalculation determination unit F5 determines to perform recalculation regarding the shiny area ArS for the moving subject OB. As a result, the normal vector calculation unit F3 calculates the normal vector NV on the basis of the shiny area ArS, and the light source location specifying unit F4 calculates the light source direction LD and the light source location LL again.

Furthermore, in a case where not only the subject image Go but also the entire angle of view changes due to a change in the location or orientation of the imaging device 100, the recalculation determination unit F5 performs again the calculation of the normal vector NV in all the shiny areas ArS and the calculation of the light source direction LD and the light source location LL.

Note that, also in a case where the light source LS (the sun LSs or the like) on the captured image has moved, the recalculation determination unit F5 performs again the calculation of the normal vector NV in all the shiny areas ArS and the calculation of the light source direction LD and the light source location LL.

The posture estimation unit F6 performs processing of estimating the posture of the imaging device 100 according to an output from the 6DoF sensor 107. The posture information on the imaging device 100 estimated by the posture estimation unit F6 is used for the recalculation determination unit F5 to appropriately determine whether to perform recalculation.

### <5. Processing flow>

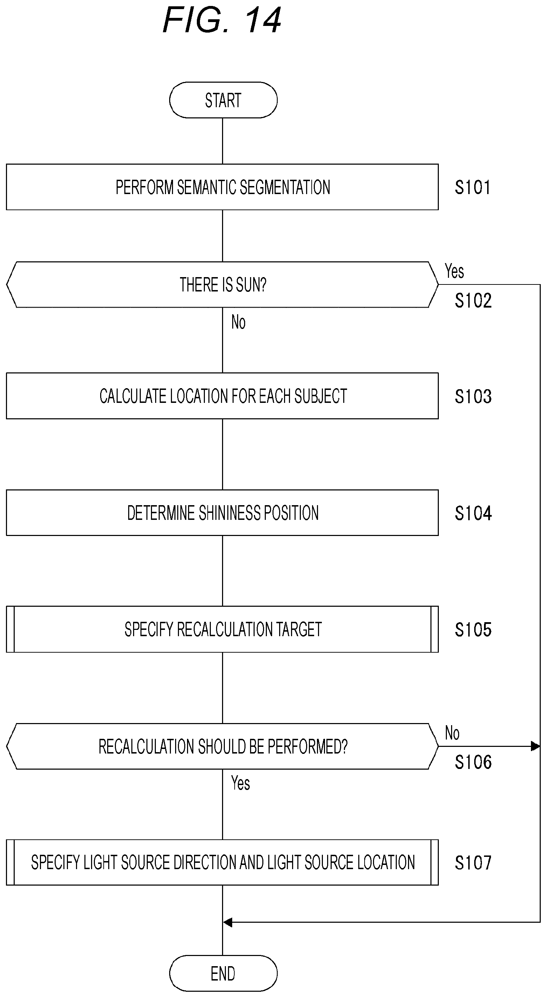

Fig. 14 illustrates an example of processing executed by the CPU 71 of the information processing apparatus 1 to specify the light source direction LD and the light source location LL.

In step S101, the CPU 71 performs semantic segmentation by inputting of the captured image to an AI model, or the like.

In step S102, the CPU 71 determines whether or not the sun LSs appears in the captured image.

In a case where the sun LSs appears, the location of the sun LSs as the light source LS is estimated to be an infinite point, so that recalculation of the light source location LL is unnecessary. For that reason, a series of processing illustrated in Fig. 14 ends.

On the other hand, in a case where the sun LSs does not appear in the captured image, the CPU 71 calculates a location of each subject OB on the basis of output data from the ToF sensor 103 in step S103. Here, a relative location with respect to the imaging device 100 and a relative location between the subjects OB are calculated.

In step S104, the CPU 71 determines a shininess position on the basis of the luminance value. Note that, in this processing, specification of the shiny area ArS and calculation of the shininess center ArC are not performed. That is, the processing of step S104 is merely processing of determining whether or not the shiny area ArS is present on the subject OB.

In step S105, the CPU 71 specifies the subject OB that is a recalculation target.

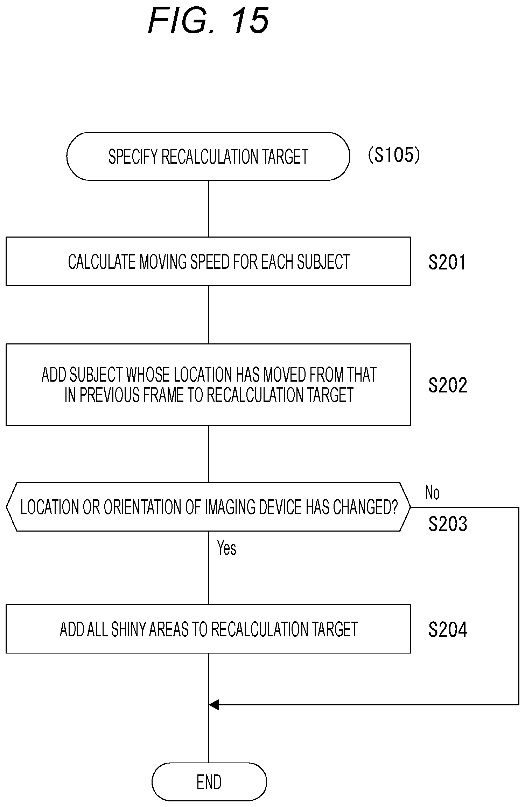

Fig. 15 illustrates specific processing content of step S105.

In step S201, the CPU 71 calculates a moving speed of each subject OB. The moving speed is calculated on the basis of a relative distance between the imaging device 100 and the subject OB in the previous frame and the current frame, and a moving speed of the imaging device 100. Note that, since the distance image output from the ToF sensor 103 is used for calculating the speed, the moving speed of the subject OB in the depth direction in the captured image can also be appropriately calculated.

In step S202, the CPU 71 adds the subject OB whose location has moved from that in the previous frame to the recalculation target. Note that the subject OB set as the recalculation target here is the subject OB including the shiny area ArS. The subject OB in which the shiny area ArS is not present is not a target for recalculation in the first place.

In step S203, the CPU 71 determines whether or not the location or orientation of the imaging device 100 has changed on the basis of an output of the 6DoF sensor 107.

In a case where it is determined that the location or orientation of the imaging device 100 has changed, the CPU 71 adds all the shiny areas ArS to the recalculation target in step S204.

On the other hand, in a case where it is determined that the location and orientation of the imaging device 100 have not changed, the CPU 71 avoids the processing of step S204.

Referring back to Fig. 14, the description will be continued.

In step S106, the CPU 71 determines whether or not recalculation should be performed. That is, in a case where there is the subject OB determined to be the recalculation target in step S105, it is determined that recalculation should be performed.

In a case where it is determined that recalculation should be performed, the CPU 71 specifies the light source direction LD and the light source location LL for the light source LS again in step S107.

On the other hand, in a case where it is determined that recalculation is unnecessary, the CPU 71 avoids the processing of step S107. As a result, the light source direction LD and the light source location LL adopted in the previous frame are continuously adopted in the current frame.

By selecting the subject OB that is a target for recalculation as illustrated in Figs. 14 and 15, it is possible to achieve reduction of an amount of computation in the information processing apparatus 1. Furthermore, in a case where there is no subject OB as a recalculation target, the processing of step S107 is avoided, whereby reduction is achieved of the amount of computation in the information processing apparatus 1.

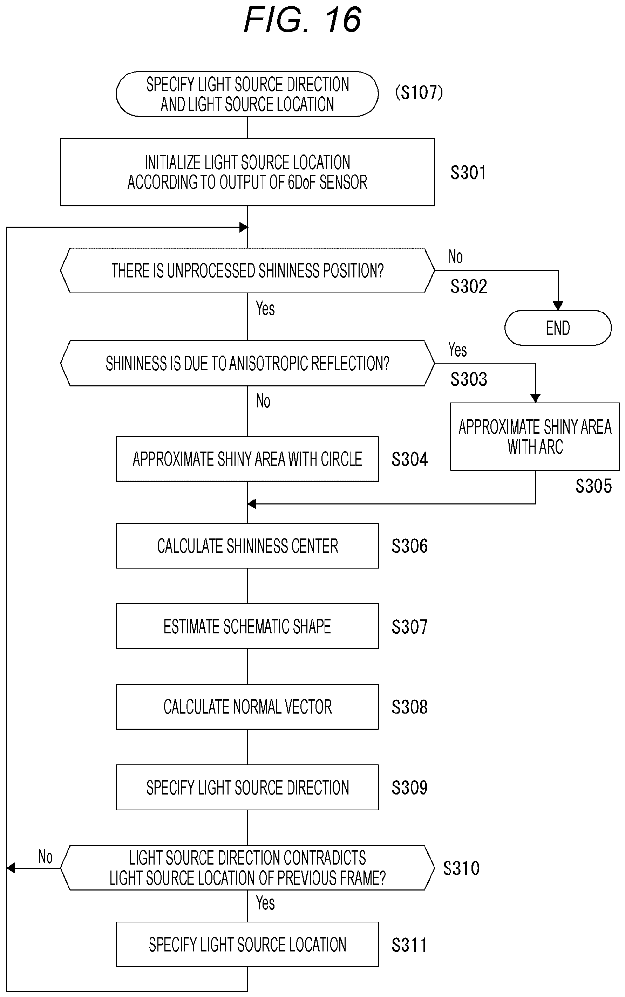

Processing of specifying the light source direction LD and the light source location LL in step S107 will be described with reference to Fig. 16.

In step S301, the CPU 71 initializes the light source location LL according to the output of the 6DoF sensor 107. That is, the light source location LL adopted in the previous frame is corrected by an amount of movement of the imaging device 100.

In step S302, the CPU 71 determines whether or not there is an unprocessed one among shininess positions determined in step S104 of Fig. 14. In a case where it is determined that there is an unprocessed shininess position, the CPU 71 selects one of unprocessed shininess positions as a processing target, and proceeds to step S303.

On the other hand, in a case where it is determined that the processing has been ended for all the shininess positions, the CPU 71 ends a series of processing illustrated in Fig. 16. In this case, in most cases, the specification of the light source location LL is completed in the processing of step S310 or step S311 described later.

However, in a case where the shininess position is not detected in step S104, it is determined that there is no unprocessed shininess position in step S302, but specification of the light source location LL is not performed.

In step S303, the CPU 71 determines whether or not processing target shininess is due to anisotropic reflection. In this determination processing, it is determined whether or not the processing target shininess is due to anisotropic reflection on the basis of classification information on the subject OB obtained by the semantic segmentation in step S101.

For example, hair (head) of a person can be exemplified as a representative of shininess due to anisotropic reflection. That is, in the processing of step S303, it is determined whether or not the subject OB in which the shininess is generated is hair of a person. Note that there may be the subject OB in which shininess is caused by anisotropic reflection other than hair of a person.

In a case where it is determined that the processing target shininess is not due to anisotropic reflection, the CPU 71 approximates the shiny area ArS with a circle or an ellipse in step S304.

On the other hand, in a case where it is determined that the processing target shininess is due to anisotropic reflection, the CPU 71 approximates the shiny area ArS with an arc in step S305.

In step S306, the CPU 71 calculates the shininess center ArC.

In step S307, the CPU 71 performs schematic shape estimation for the subject OB. For example, in a case where the subject OB is a substantially sphere, the size of the subject OB is estimated, and in a case where the subject OB has a substantially cylindrical shape or a substantially conical shape, the orientation and size of the subject OB are estimated. Note that estimation processing in step S307 may be completed in the semantic segmentation in step S101.

In step S308, the CPU 71 calculates the normal vector NV at the shininess center ArC.

In step S309, the CPU 71 specifies the light source direction LD for the processing target shiny area ArS.

In step S310, the CPU 71 determines whether or not the calculated light source direction LD contradicts the light source location LL adopted in the previous frame.

In a case where it is determined that there is no contradiction, the CPU 71 returns to step S302 and selects the next unprocessed shininess.

On the other hand, in a case where it is determined that there is a contradiction, the CPU 71 specifies the light source location LL in step S311. Note that, in a case where the first shiny area ArS is being processed, the processing of step S311 is avoided.

Note that, in order to avoid a backlight state due to the sun LSs, the light source LS other than the sun LSs may be arranged at the imaging site. In a case where such processing of estimating the location of the light source LS is performed, the processing of step S102 of Fig. 14 may be avoided, whereby the processing of step S103 may be executed regardless of whether or not the sun LSs appears in the captured image.

Furthermore, in the processing of specifying the recalculation target in step S105, a change in the position of the sun LSs on the image may be considered.

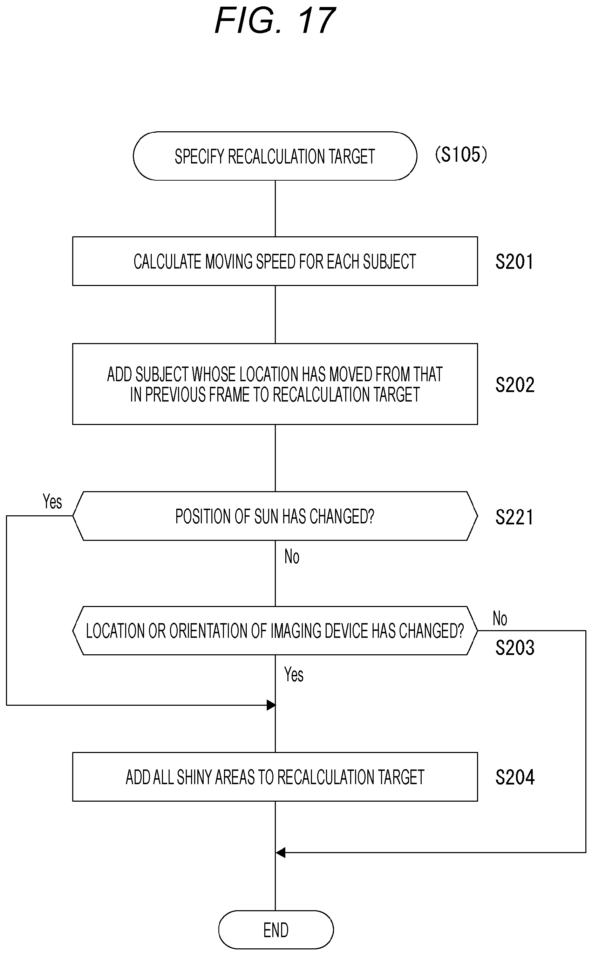

This will be specifically described with reference to Fig. 17. Note that processing similar to that in Figs. 15 is denoted by the same step number, and description thereof is omitted.

After adding the moving subject OB to the recalculation target by performing each of pieces of processing of steps S201 and S202, the CPU 71 determines whether or not the position of the sun LSs on the captured image has changed in step S221.

In a case where it is determined that the position of the sun LSs on the captured image has changed, the CPU 71 proceeds to step S204 and adds all the shiny areas ArS to the recalculation target.

A target for recalculation is selected as illustrated in Fig. 17, whereby the amount of computation in the information processing apparatus 1 can be reduced.

In a case where moving image capturing is performed over a relatively long time such as several tens of minutes or several hours, it is appropriately determined that the position of the sun LSs has changed in some frames in the moving image capturing (step S221), so that the changed position of the sun LSs can be continuously specified.

Note that accuracy of the calculation of the normal vector NV and the calculation of the light source direction LD is improved in the case of being based on the shininess on a plane such as a wall, a floor, a ceiling, or a water surface as compared with the shininess on the surface of a sphere or a cylindrical shape.

Thus, the shininess on the plane may be preferentially detected and used for calculation of the normal vector NV and the light source direction LD. Furthermore, in a case where two or more pieces of the shininess on the plane can be specified, each of pieces of processing after step S303 illustrated in Fig. 16 for other pieces of the shininess may be omitted.

As a result, the amount of computation in the CPU 71 can be reduced.

### <6. Modification in light source location estimation>

Note that, in the processing of specifying the subject OB that is a recalculation target illustrated in Fig. 15, an example of using the distance image obtained from the ToF sensor 103 has been described, but the processing is not limited thereto.

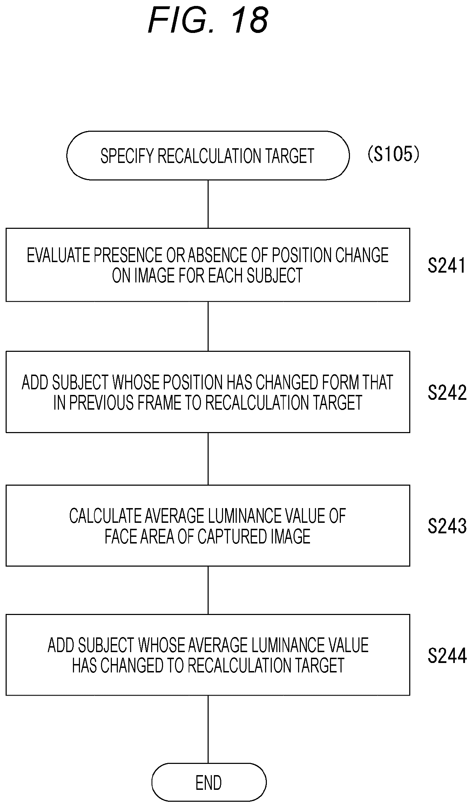

Fig. 18 illustrates an example.

In step S241, the CPU 71 evaluates, for each subject OB, whether or not the position on the captured image has changed.

In step S242, the CPU 71 adds the subject OB whose position has changed from that in the previous frame to the recalculation target.

In step S243, the CPU 71 calculates an average luminance value for each face area of the subject OB that appears in the captured image and is a person.

In step S244, the CPU 71 adds the subject OB whose average luminance value has changed to the recalculation target.

As a result, the subject OB as a recalculation target can be specified. Thus, the amount of computation in the information processing apparatus 1 can be reduced.

### <7. First example of effect processing based on light source location>

The light source direction LD or the light source location LL specified by the above-described method is used, for example, for effect processing of superimposing an appropriate effect without discomfort on an image.

Here, a description will be given of a first example of effect processing based on the light source direction LD or the light source location LL. Note that the effect processing of the present example is processing performed in post production, for example.

### <7-1. Mode of effect processing>

A description will be given of effect processing of superimposing the catch light CL for making eyes look lively on an image area where the eyes of the subject OB are imaged. The catch light CL can be superimposed at an appropriate place according to the light source location LL to generate a natural image without discomfort.

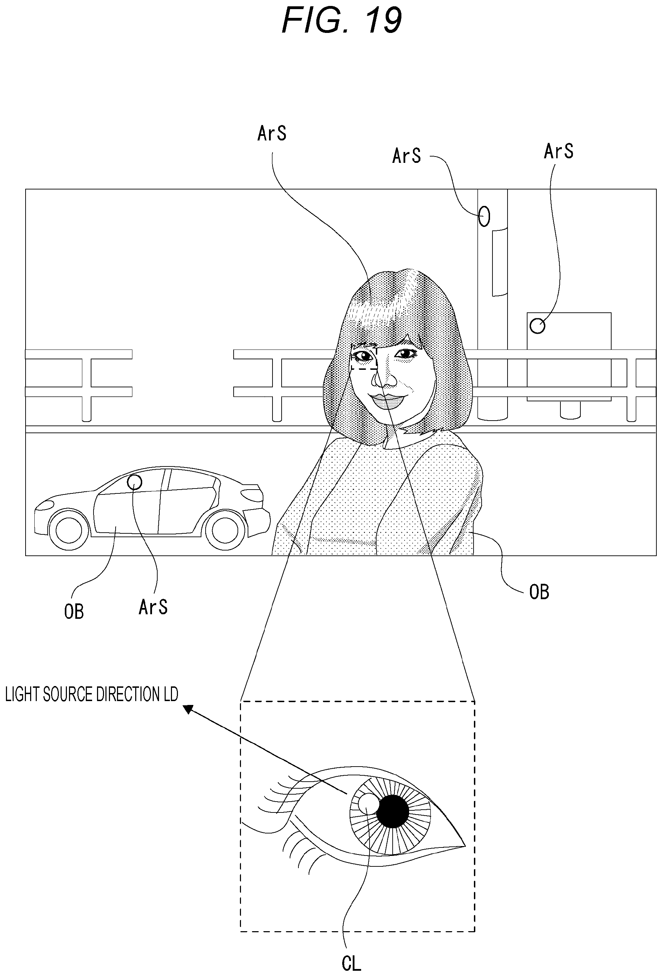

Fig. 19 illustrates an example of an image on which the catch light CL is superimposed. As illustrated, the catch light CL is superimposed on a position at which light emitted from the light source LS located at the estimated light source location LL is reflected.

Note that the light source location LL is specified as described above on the basis of the shape and size of the shiny area ArS estimated on the captured image.

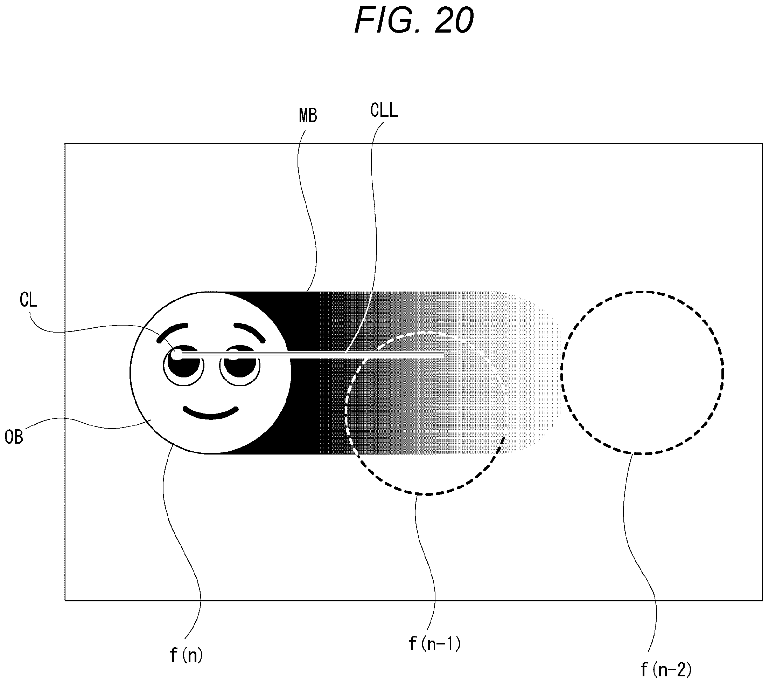

Furthermore, in a case where motion blur MB is added for increasing a dynamic feeling for the moving subject OB, an impressive image can be created by addition of a bright line also to the catch light CL toward a direction in which the subject OB was located in the previous frame (see Fig. 20). This bright line is referred to as a catch light bright line CLL.

Note that, in a case where the subject OB as a person moves while walking, the subject OB may move while moving up and down. For example, in the example illustrated in Fig. 20, the face area of the subject OB is displaced up or down one frame before f(n-1) or two frames before f(n-2) with respect to a current frame f(n). At this time, in a case where the catch light bright line CLL is superimposed according to a change in the position of the face area of the subject OB, the catch light bright line CLL has a wavy shape instead of a straight line.

However, in a case where it is desired to express a feeling of running fast of the subject OB, the motion blur MB or the like having a wavy shape is not necessarily appropriate. That is, avoiding making the catch light bright line CLL have a wavy shape and performing superimposition as a straight line can emphasize linear movement of the subject OB more, and an image with a feeling of running fast can be generated.

For this purpose, for example, in drawing of the catch light bright line CLL, it is possible to generate the catch light bright line CLL linearly by focusing on movement of the subject OB at an intended time constant.

Furthermore, for the added motion blur MB, bokeh may be added as a distance from the subject OB in the current frame f(n) increases.

Furthermore, in a case where a bright line is superimposed along a movement locus of a fingertip or a toe, it is preferable to consider a joint of a human body. Note that, in a case where the subject OB is an AI-generated subject OB' generated by AI, images for respective parts are separated, and then each part image (texture) is pasted to a plate polygon by use of a billboard technology to create an image. Here, a plate polygon to which each part image is pasted and that is arranged to always face a virtual camera by use of the billboard technology will be referred to as a "billboard". Note that an object set as a target to which the part image is to be pasted may be a primitive shape such as a sphere, a prismatic shape, or a cylindrical shape selected according to a shape of each part of the subject OB, or may be a 3D model obtained by recognition of the subject OB.

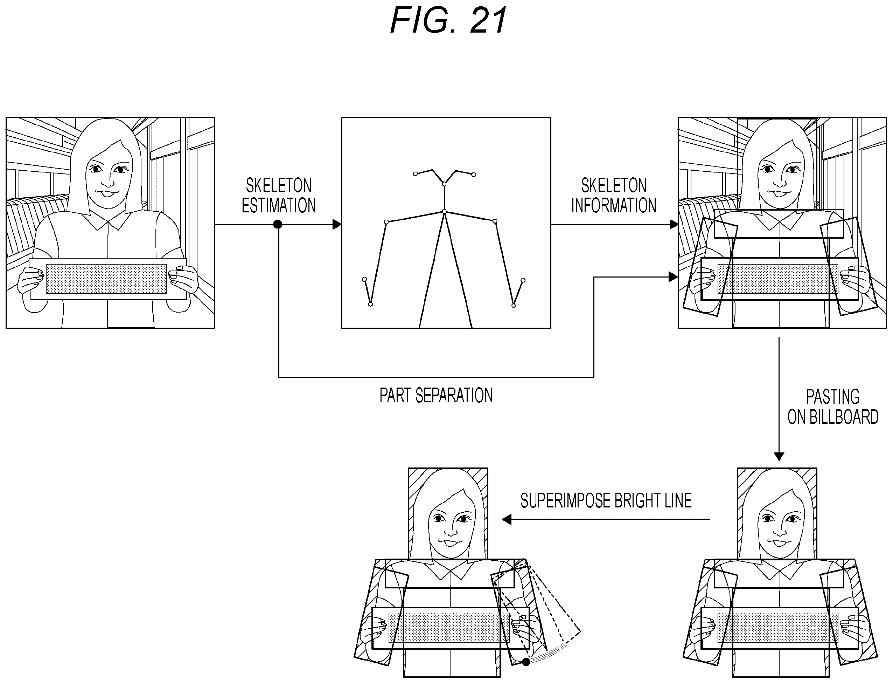

This will be specifically described with reference to Fig. 21.

First, an image generated by the generative AI (a live-action image is also acceptable) is prepared, and skeleton estimation processing is performed. As a result, a skeleton of a person appearing in the image is estimated.

Subsequently, the AI-generated subject OB' is separated into parts by use of estimated skeleton information. The texture for each part of the AI-generated subject OB' generated here is referred to as "part texture PT". In generation of the part texture PT, the foreground and the background of the image may be separated by use of the depth map for the image, and then the AI-generated subject OB' may be separated into parts. Furthermore, here, light source location estimation processing described above may be performed, whereby the location of the light source LS may be estimated.

Subsequently, the part texture PT is pasted to the billboard arranged for each part of the AI-generated subject OB'. Note that a shaded area in Fig. 21 is a transparent area, and the background image can be visually recognized on the billboard to which the shaded area is pasted.

Finally, in a case where a part of the AI-generated subject OB' is moving, for example, in a situation where the AI-generated subject OB' is moving an arm, rendering processing is performed of adding the natural motion blur MB according to a moving speed of the billboard or a shutter speed of the virtual camera. Moreover, in a case where an image is generated on which a bright line corresponding to movement of the distal end of the elbow is superimposed, a bright line that forms a circular locus with the joint of the shoulder, which is the base of the arm, as a fulcrum are superimposed on a position of the distal end of the elbow (see Fig. 21).

Furthermore, for example, in a case where an image is generated in which a bright line corresponding to movement of a fingertip is superimposed in a state where a forearm is rotated, a bright line that forms a circular locus with the elbow joint as a fulcrum is superimposed on a position of the fingertip. Similarly, in the case of a bright line of a toe, the bright line may be an arc with the knee or hip joint as a fulcrum.

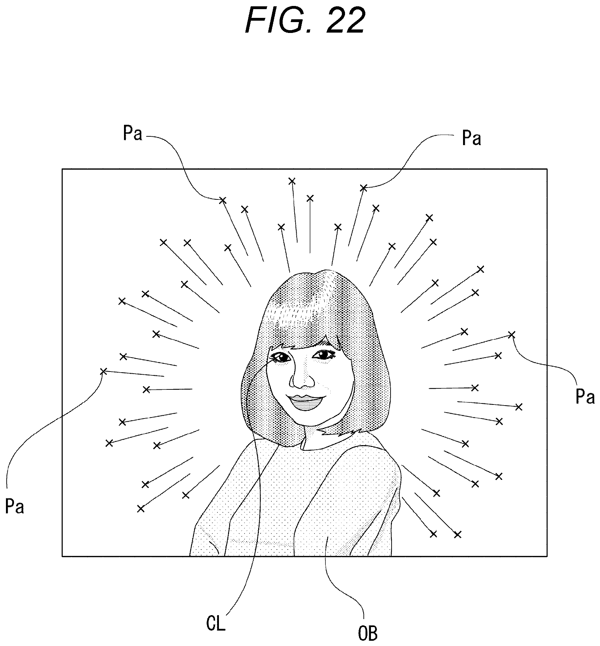

Fig. 22 illustrates another example. The example of Fig. 22 is an example of superimposing an effect such as a firework bursting from the subject OB.

After the catch light CL corresponding to the light source location LL is superimposed on the subject OB, particles Pa are arranged around the subject OB.

For each arranged particle Pa, particles Pa in the past frames are added, and the particles Pa are connected together by a bright line to visualize movement of the particle Pa.

At this time, by focusing on the movement of the particle Pa at an intended time constant, it is possible to superimpose a linear or radial natural emission line.

Furthermore, to the bright line of the particle Pa, bokeh may be added that becomes larger as the particle Pa deviates from a position of that in the current frame.

Note that it is also possible to estimate movement between frames with respect to a fingertip or a pupil of a person as the subject OB estimated by the shape estimation unit F1 described above, and emphasize or blink the bright line of the particle Pa so as to follow the movement. As a result, effect processing linked to the movement of the subject OB can be performed.

Note that the subject OB that is a target for such effect processing may be a pen point of a pen light held by a hand of the subject OB, or the like, in addition to the eyes, fingertips, and toes of the person, and particles.

### <7-2. Functional configuration>

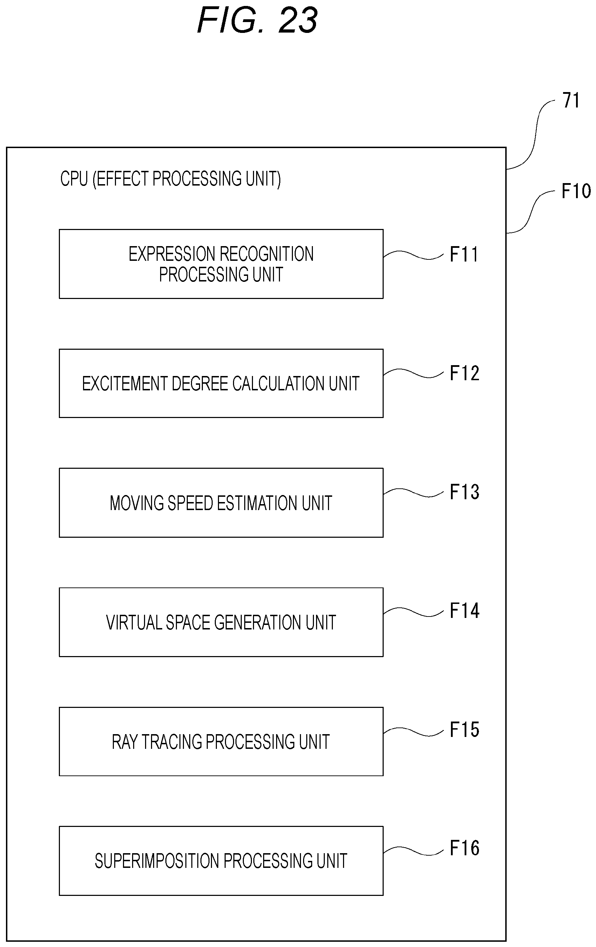

The CPU 71 of the information processing apparatus 1 functions as an effect processing unit F10 that performs various types of processing for superimposing the above-described effects (see Fig. 23).

The effect processing unit F10 further functions as an expression recognition processing unit F11, an excitement degree calculation unit F12, a moving speed estimation unit F13, a virtual space generation unit F14, a ray tracing processing unit F15, and a superimposition processing unit F16.

Note that, in the present example, an example will be described in which the information processing apparatus 1 that performs calculation of the light source location LL has a function for effect processing; however, an apparatus different from the information processing apparatus 1 that performs calculation of the light source location LL may be configured to perform the effect processing.

The expression recognition processing unit F11 recognizes an expression of the subject OB captured in the captured image and estimates a feeling of the expression. The estimated feeling is used for selection of an effect to be superimposed, and the like.

Note that the expression recognition processing unit F11 may select the subject OB that is a target for expression recognition. For example, distance information for each subject OB may be acquired on the basis of the distance image, and the subject OB whose distance information is less than or equal to a predetermined value, that is, the subject OB whose distance from the imaging device 100 is less than or equal to a predetermined distance at the time of imaging may be set as a target for expression recognition.

The excitement degree calculation unit F12 calculates an excitement degree on the basis of information of the expression and feeling obtained for the subject OB captured in the captured image. For example, the excitement degree is calculated so as to have a higher numerical value as livening up of feeling is higher. The excitement degree can also be referred to as a livening up degree.

Note that the expression recognition processing unit F11 and the excitement degree calculation unit F12 may obtain information on the expression and the excitement degree by inputting of the captured image to an AI model.

The excitement degree calculation unit F12 calculates a coefficient according to the excitement degree. The coefficient is set to a higher value as the excitement degree is higher, for example, and is used when strength of the effect to be superimposed is determined.

The strength of the effect is, for example, the size or the like of the catch light CL in the case of the catch light CL, the length or color density of the bright line in the case of the catch light bright line CLL, and the length or density of the motion blur MB, or a ratio of alpha blend in the case of the motion blur MB.

The moving speed estimation unit F13 estimates (calculates) a moving speed of each subject OB on the basis of the distance image for the subject OB in the previous frame and the distance image for the subject OB in the current frame. Information of the moving speed estimated for the subject OB is used when a mode of an effect to be superimposed is determined.

The moving speed estimation unit F13 may adjust the coefficient described above according to the moving speed in order to superimpose a conspicuous effect as the moving speed increases. In other words, the coefficient may be calculated according to the moving speed.

Furthermore, the moving speed estimation unit F13 may calculate the coefficient by a ratio of the moving speed of the subject OB to the shutter speed at the time of imaging. That is, the moving speed estimation unit F13 may calculate the coefficient to be larger as the moving speed of the subject OB with respect to the shutter speed is faster.

Note that, in a case where the strength of the effect is changed according to the moving speed or the shutter speed, a multiple exposure method may be adopted.

The virtual space generation unit F14 performs processing of generating a virtual space and arranging the virtual light source LS, the imaged subject OB, and the imaging device 100 at the time of imaging in the virtual space. The virtual space generation unit F14 generates the virtual space, whereby it is possible to superimpose an appropriate effect that does not three-dimensionally fail.

The ray tracing processing unit F15 performs processing of determining a superimposition position of the catch light CL by tracing an optical path to the light source LS from the imaging device 100 arranged in the three-dimensional space.

The superimposition processing unit F16 performs processing of superimposing the catch light CL on the determined superimposition position. Furthermore, in a case where the motion blur MB is superimposed, positions of the subjects OB are specified on the basis of the distance image, and the superimposition position is determined. For example, in a case where the moving subject OB to be superimposed with the motion blur MB is located on the back side from the stationary subject OB, the superimposition position of the motion blur MB is determined so as not to overlap the subject OB located on the front side.

Note that, as described above, in a case where the bright line representing the movement locus of the distal end of a part is superimposed for the AI-generated subject OB', the skeleton estimation processing, processing of generating the part texture PT, and the like may be performed for the AI-generated subject OB' by the superimposition processing unit F16. Furthermore, these pieces of processing may be implemented by other processing units.

### <7-3. Processing example>

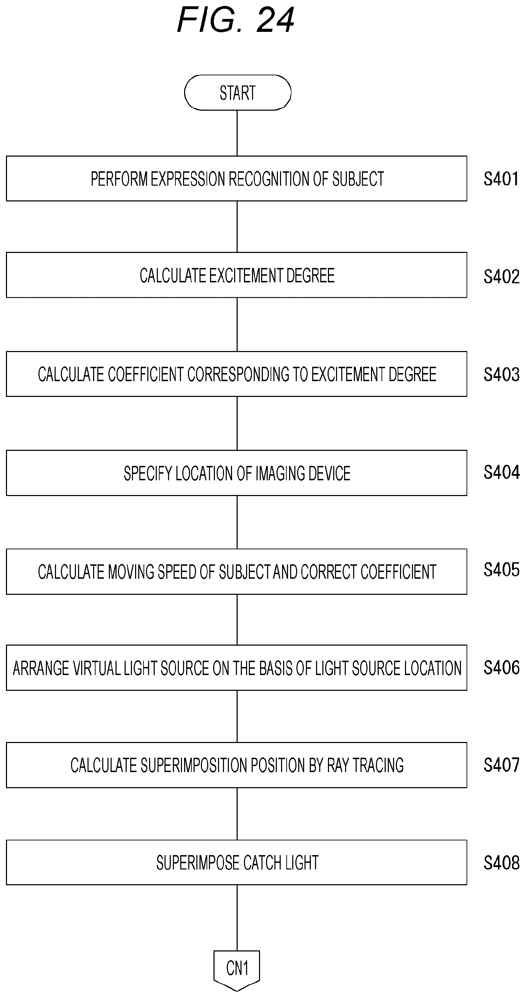

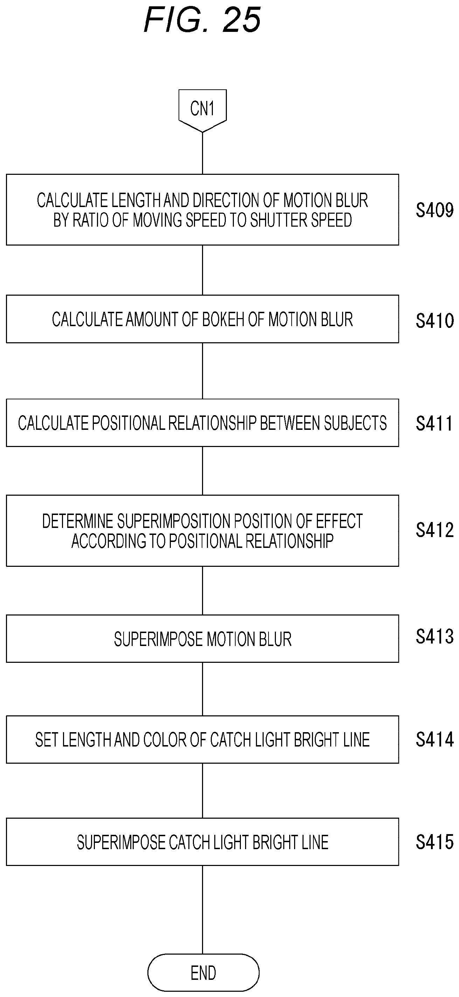

Figs. 24 and 25 illustrate an example of processing executed by the CPU 71 to superimpose the catch light CL or the motion blur MB. Note that connection between processing steps of the drawings is represented by use of a connector CN1.

In step S401, the CPU 71 performs expression recognition of the subject OB. At this time, the CPU 71 may acquire distance information for each subject OB, and perform expression recognition on the subject OB whose distance information is less than or equal to a predetermined distance. That is, the subject OB such as a passerby who is far from the imaging device 100 may be excluded from a target for expression recognition processing.

In step S402, the CPU 71 calculates the excitement degree according to a result of the expression recognition. For example, in a case where the subject OB that looks like having fun is detected, the excitement degree is calculated to be high. Furthermore, the excitement degree is calculated to be higher as the number of such subjects OB is larger.

In step S403, the CPU 71 calculates the coefficient corresponding to the excitement degree.

In step S404, the CPU 71 specifies the location of the imaging device 100.

In step S405, the CPU 71 calculates the moving speed of each subject OB on the basis of the distance image obtained from the ToF sensor 103. Then, the CPU 71 corrects the coefficient according to the calculated moving speed.

In this processing, the CPU 71 may acquire information of the shutter speed at the time of imaging and correct the coefficient according to the moving speed of the subject OB with respect to the shutter speed.

In step S406, the CPU 71 arranges a virtual light source in the virtual space on the basis of the light source location LL.

In step S407, the CPU 71 calculates the superimposition position of the catch light CL by ray tracing.

In step S408, the CPU 71 superimposes the catch light CL on the captured image at the superimposition position.

Note that each of pieces of processing from step S401 to step S408 is performed for each processing target subject OB.

In step S409 of Fig. 25, the CPU 71 calculates the length and direction of the motion blur MB by the ratio of the moving speed of the subject OB to the shutter speed at the time of imaging. At this time, the coefficient calculated in step S403 is used for the length of the motion blur MB. That is, the length of the motion blur MB is set to be longer as the excitement degree is higher.

Furthermore, the motion blur MB is performed, for example, by performing alpha blend of the background and a superimposed image of the motion blur MB. A blend ratio in the alpha blend may be determined by use of the coefficient. That is, a component of the motion blur MB may be increased as the excitement degree is higher.

In step S410, the CPU 71 calculates an amount of bokeh of the motion blur MB. The coefficient may be used for calculation of the amount of bokeh. For example, the amount of bokeh may be decreased as the excitement degree is higher.

In step S411, the CPU 71 calculates a positional relationship between the subjects OB on the basis of the distance image.

In step S412, the CPU 71 determines the superimposition position of the effect according to the positional relationship between the subjects OB. For example, in a case where the moving subject OB on which the motion is to be superimposed is located on the back side from the stationary subject OB, the superimposition position is determined so as not to overlap the subject OB located on the front side.

In step S413, the CPU 71 superimposes the motion blur MB on the captured image according to the superimposition position.

In step S414, the CPU 71 sets the length and color of the catch light bright line CLL. The above-described coefficient may be used to determine the length and color density of the catch light bright line CLL. That is, the length and color density of the catch light bright line CLL may be increased as the excitement degree is higher.

In step S415, the CPU 71 superimposes the catch light bright line CLL on the captured image according to the superimposition position.

Note that the effect processing other than the superimposition of the catch light CL, the catch light bright line CLL, and the motion blur MB includes backlight correction.

For the backlight correction, as described above, by appropriately estimating the light source location LL of the light source LS, it is possible to perform appropriate backlight correction regardless of the change in the subject OB.

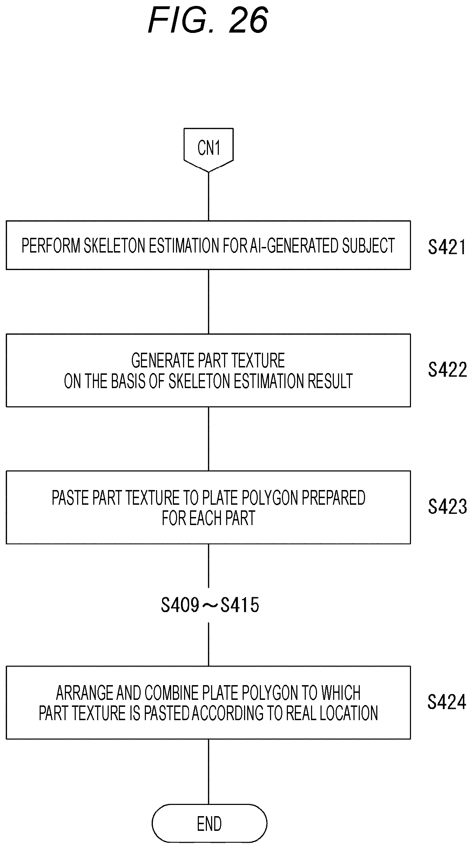

Furthermore, Fig. 26 illustrates an example of processing executed by the CPU 71 in a case where the subject OB is the AI-generated subject OB'. Note that a series of processing illustrated in Fig. 26 is an example of processing executed subsequent to pieces of processing in Fig. 24.

In step S421, the CPU 71 performs skeleton estimation for the AI-generated subject OB'.

Moreover, in step S422, the CPU 71 separates the AI-generated subject OB' into parts on the basis of a skeleton estimation result and generates the part texture PT.

Moreover, in step S423, the CPU 71 pastes the part texture PT to the billboard prepared for each part.

The CPU 71 superimposes the motion blur MB or the catch light bright line CL on the captured image by executing each of pieces of processing from step S409 to step S415. At this time, the motion blur MB for the part of the AI-generated subject OB' is superimposed so as to draw an arc centered on the joint instead of a straight line.

Finally, in step S424, the CPU 71 arranges, for example, the billboard to which the part texture PT is pasted on the virtual space according to a real location of the subject. As a result, it is possible to obtain an image in a state where the AI-generated subject OB' is arranged in the virtual space. Then, the motion blur MB is superimposed similarly to the actual subject OB, so that the AI-generated subject OB' arranged in the virtual space is made as having no discomfort.

### <8. Second example of effect processing based on light source location>

The light source direction LD or the light source location LL specified by the above-described method is used, for example, for effect processing of superimposing an appropriate effect without discomfort on an image.

Here, a description will be given of a second example of effect processing based on the light source direction LD or the light source location LL. Note that the effect processing of the present example is processing performed in real time at the time of moving image capturing, for example.

### <8-1. Mode of effect processing>

Some video distributors perform live distribution of distributing a moving image being captured in real time. Such live distribution may be performed not only indoors but also outdoors, and there may be not only a main subject OBm as a performer but also a sub-subject OBs that is not a performance target such as a passerby in the angle of view.

Such a sub-subject OBs may cause a problem of a portrait right. In order to cope with this, it is conceivable to apply mosaic processing or the like to the entire imaging area other than the main subject OBm, but subjects to be imaged such as buildings and scenery become targets of mosaic processing, and the meaning of live distribution outdoors is diminished.

Thus, the effect processing in the present example is processing of superimposing a 3D avatar AB on a face portion of the sub-subject OBs in real time.

Furthermore, in order to generate a distribution image without causing discomfort as much as possible, the 3D avatar AB is assumed to be photorealistic. Such a photorealistic 3D avatar AB can be generated substantially inexhaustibly by use of an AI model.

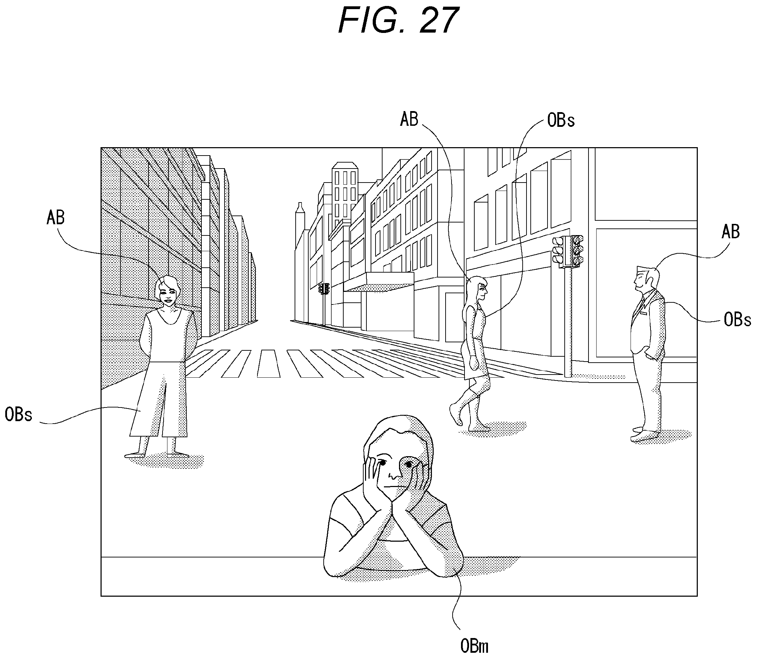

Fig. 27 illustrates an example of schematically representing an image in which the photorealistic 3D avatar AB is superimposed on the sub-subject OBs. As illustrated, the 3D avatar AB is not superimposed on the main subject OBm, and the 3D avatar AB is superimposed on the sub-subject OBs.

In such a 3D avatar AB, the generated 3D avatar AB may be superimposed as it is, but if the photorealistic 3D avatar AB is superimposed in an unprocessed state, there is a possibility that discomfort is caused in shade, the amount of bokeh, and the like (see Fig. 27).

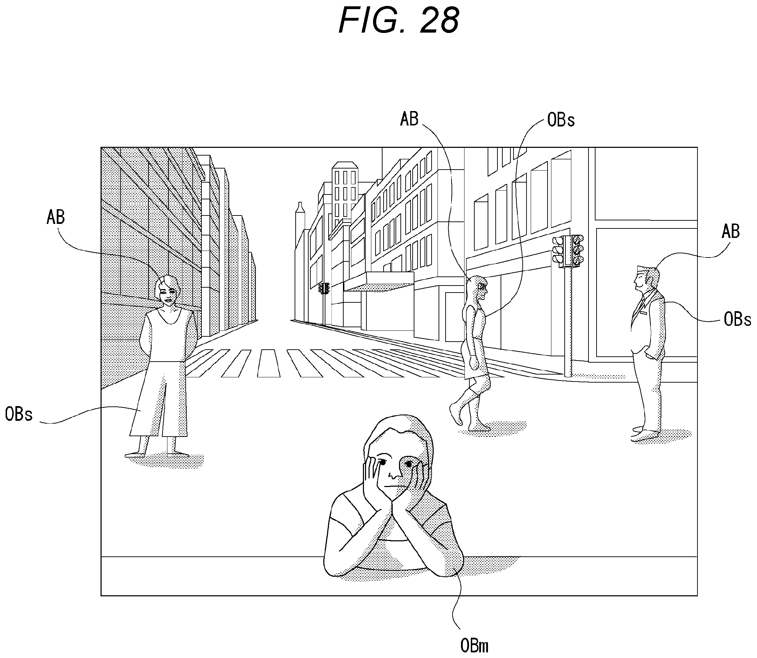

In the present example, on the face portion of the sub-subject OBs, the 3D avatar AB is superimposed to which shade according to the light source direction LD or the light source location LL specified by the above-described method or bokeh according to a positional relationship with the surrounding subject OB is added (see Fig. 28).

Furthermore, the 3D avatar AB is desirably generated in accordance with an expression and a face orientation of the sub-subject OBs. The 3D avatar AB thus generated may be pasted on the above-described billboard and combined to obtain a desired image, for example.

### <8-2. Functional configuration>

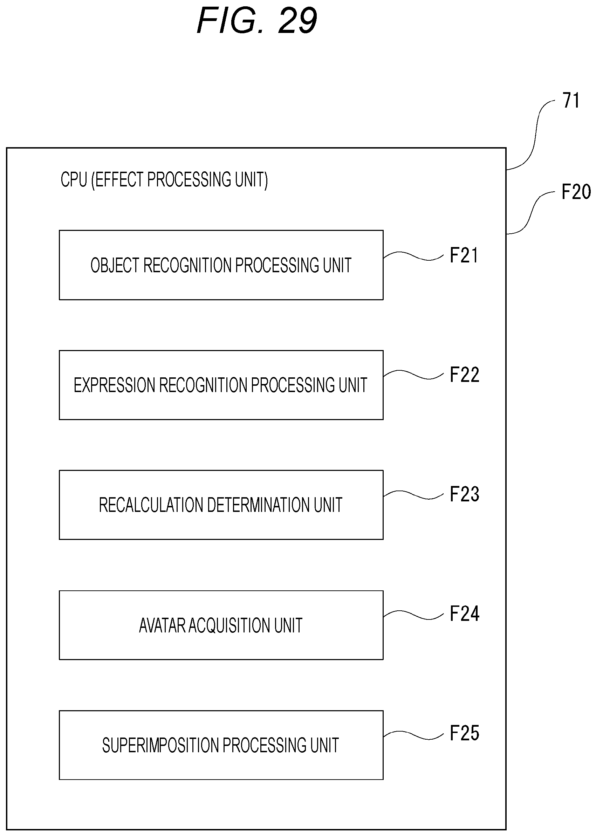

The CPU 71 of the information processing apparatus 1 functions as an effect processing unit F20 that performs effect processing of superimposing the above-described 3D avatar AB (see Fig. 29).

The effect processing unit F20 further functions as an object recognition processing unit F21, an expression recognition processing unit F22, a recalculation determination unit F23, an avatar acquisition unit F24, and a superimposition processing unit F25.

Note that, in the present example, an example will be described in which the information processing apparatus 1 that performs calculation of the light source location LL has a function for effect processing; however, an apparatus different from the information processing apparatus 1 that performs calculation of the light source location LL may be configured to perform the effect processing.

The object recognition processing unit F21 obtains classification information for each subject OB by performing semantic segmentation for each subject OB captured in the captured image.

The object recognition processing unit F21 detects and classifies whether the subject OB recognized as a person is the main subject OBm or the sub-subject OBs. The sub-subject OBs is a candidate on which the 3D avatar AB is to be superimposed. Note that selection of the main subject OBm may be performed by allowing the user to select one of persons included in a through image.

The object recognition processing unit F21 obtains distance information for each sub-subject OBs on the basis of the distance image obtained from the ToF sensor 103. The distance information obtained here is used when the size of the bokeh to be added to the 3D avatar AB is determined.

Furthermore, the object recognition processing unit F21 sets the sub-subject OBs for which the distance information is obtained, as a first subject OBs1, and sets the sub-subject OBs located at a distance where the distance information cannot be obtained, as a second subject OBs2.

The first subject OBs1 is, for example, a person on which the 3D avatar AB is to be superimposed. Furthermore, the second subject OBs2 is a person on which the 3D avatar AB is not superimposed. Alternatively, the second subject OBs2 may be a person on which an avatar for which recalculation is unnecessary is to be superimposed. The avatar for which recalculation is unnecessary may be either a three-dimensional avatar or a two-dimensional avatar, and is an avatar to which bokeh is appropriately added. For example, with respect to the second subject OBs2 that appears small in the distance, superimposition of such an avatar is only performed first, and even when the orientation of the second subject OBs2 changes or the distance changes thereafter, alignment with the second subject OBs2 is only performed, and discomfort is unlikely to occur. That is, for the avatar to be superimposed on the second subject OBs2, it is not necessary to perform recalculation of the effect processing to be described later.

The object recognition processing unit F21 performs skeleton estimation for the first subject OBs1. The skeleton information estimated here is used when shade is added to the 3D avatar AB.

The expression recognition processing unit F22 recognizes an expression of the first subject OBs1 among the sub-subjects OBs captured in the captured image. The estimated expression is used to select the 3D avatar AB to be superimposed. Moreover, the expression recognition processing unit F22 may recognize an angle of the face of the sub-subject OBs and use the angle to select or generate the 3D avatar AB. That is, the 3D avatar AB may be an avatar generated on the basis of the angle of the face of the sub-subject OBs.

In a case where the subject image Go, which is an image of an area where the first subject OBs1 is imaged on the captured image and is a partial image, has changed from that of the previous frame, the recalculation determination unit F23 determines whether or not to perform recalculation of the effect or the like to be added to the 3D avatar AB to be superimposed. That is, the recalculation determination unit F23 determines whether or not the 3D avatar AB calculated for the previous frame may be superimposed on the first subject OBs1 of the current frame as it is.

Some examples will be given of a case where the subject image Go changes.

The first case is a case where the position of the first subject OBs1 on the captured image changes. The case where the position of the first subject OBs1 on the captured image changes is, for example, a case where the first subject OBs1 is moving, a case where the location or orientation of the imaging device 100 has changed, or the like.

The second case is a case where the position of the first subject OBs1 on the captured image does not change and the size has changed. This may occur in a case where the first subject OBs1 has moved toward the imaging device 100, or the like.

The third case is a case where the in-focus state for the first subject OBs1 has changed. This is, for example, a case where a focus lens is driven and a change has occurred from a state of being focused on the first subject OBs1 to a state of not being focused, or vice versa, or a case where the amount of bokeh for the first subject OBs1 that is not focused has changed.

The recalculation determination unit F23 performs recalculation for the 3D avatar AB according to these changes in the subject image Go.

For example, in a case where the first subject OBs1 is moving, the recalculation determination unit F23 discards the 3D avatar AB to be superimposed for the moving first subject OBs1, and performs again the calculation for an orientation of the 3D avatar AB, the shade to be added, or the calculation for the bokeh to be added.

Furthermore, in a case where the location or orientation of the imaging device 100 has changed, the calculation for the 3D avatar AB to be superimposed on all the first subjects OBs1 is performed again. Note that determination processing as to whether each sub-subject OBs corresponds to the first subject OBs1 or the second subject OBs2 may be performed again. As a result, a passerby approaching the imaging device 100 is newly determined to correspond to the first subject OBs1, and the 3D avatar AB is superimposed.

The avatar acquisition unit F24 acquires the 3D avatar AB for each first subject OBs1 on the basis of the expression estimated by the expression recognition processing unit F22, and acquisition of the 3D avatar AB is performed by use of an AI model, for example.

The avatar acquisition unit F24 performs processing of determining the orientation of the acquired 3D avatar AB on the basis of the skeleton information estimated for each of the first subjects OBs1.

Furthermore, the avatar acquisition unit F24 performs processing of adding shade to the 3D avatar AB on the basis of the skeleton information and the information of the light source location LL (light source direction LD).

Moreover, the avatar acquisition unit F24 calculates a depth in the 3D avatar AB on the basis of the distance information, and performs processing of superimposing bokeh on the 3D avatar AB.

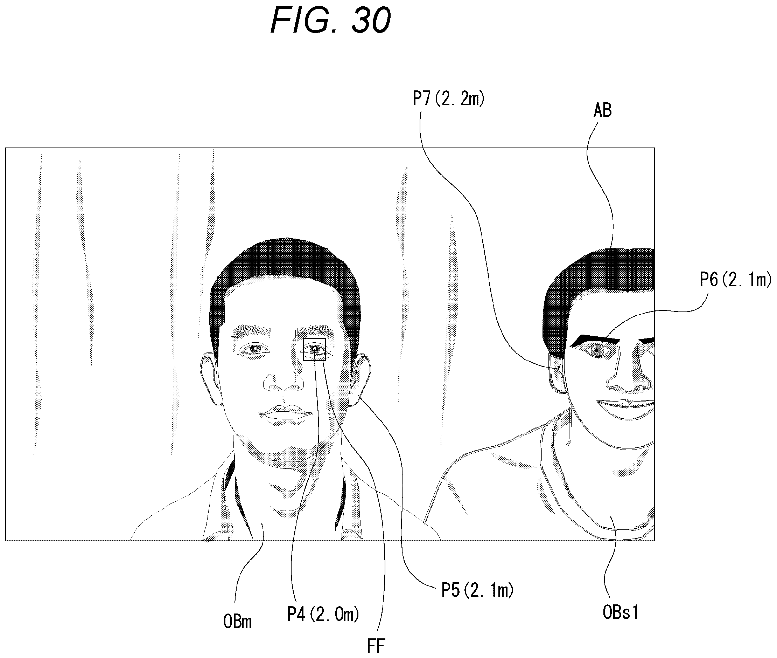

For example, the example illustrated in Fig. 30 is a captured image in a state where an eye of the main subject OBm is in focus, and a focus frame FF is superimposed on the eye (P4) of the main subject OBm. Note that the focus frame FF is for the purpose of explanation and assumed as an indication of a focus point in a through image, and the focus frame FF does not have to be present in an actual captured image.

Note that writing in parentheses attached to the reference signs in Fig. 30 indicate distance information with respect to the imaging device 100. A focal distance at the time of imaging is 2.0 m (meters). Note that the focal distance here is a distance between the imaging device 100 and the subject OB in the in-focus state.

An ear (P5) of the main subject OBm has a distance to the imaging device 100 of 2.1 m, and is imaged with a slight bokeh. In Fig. 30, bokeh is expressed with double or triple lines.

Next to the main subject OBm, the first subject OBs1 is imaged set as a target on which the 3D avatar AB is to be superimposed. The 3D avatar AB to be superimposed on the face portion of the first subject OBs1 is selected on the basis of a feeling estimated in the first subject OBs1.

Furthermore, the distance to the imaging device 100 is 2.1 m at an eye (P6) of the first subject OBs1, and the distance to the imaging device 100 is 2.2 m at an ear (P7) of the first subject OBs1.

In order to superimpose the natural 3D avatar AB on such a first subject OBs1, the 3D avatar AB is superimposed in accordance with an orientation of the first subject OBs1 for which the skeleton estimation is performed.

Furthermore, shade based on the light source location LL is added to the 3D avatar AB.

Moreover, bokeh according to the depth in the 3D avatar AB is added. That is, bokeh similar to that at the ear of the main subject OBm is added at the eye of the 3D avatar AB, and bokeh larger than that is added at the ear of the 3D avatar AB.

Bokeh processing for the 3D avatar AB is performed again each time each vertex of the 3D model (polygon) as the 3D avatar AB or a characteristic point (such as an eye, an ear, or a mouth) in the 3D avatar AB crosses a threshold.

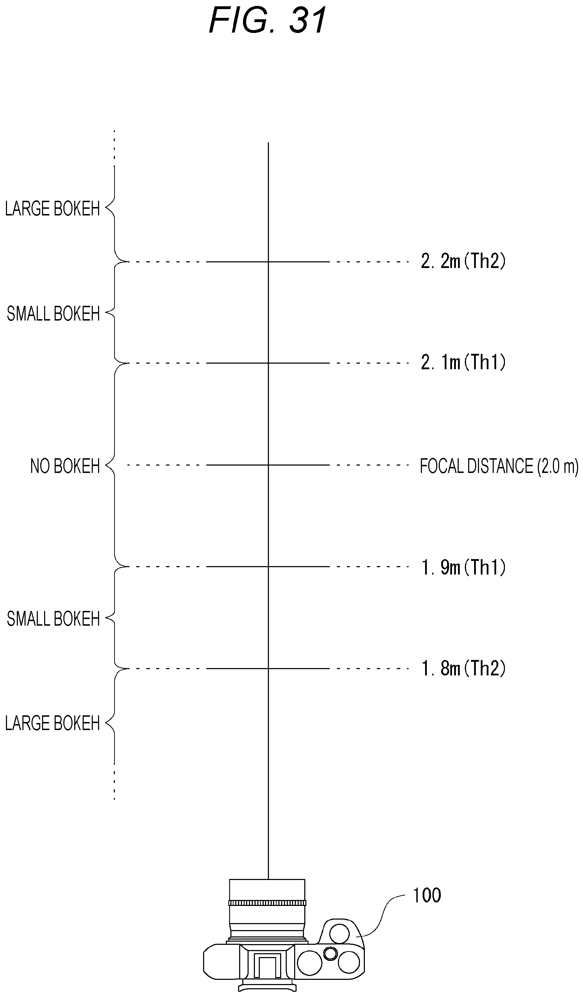

A description will be given with Fig. 31 by use of a first threshold value Th1 and a second threshold value Th2 as threshold values. Note that the first threshold Th1 is desirably determined by a depth of field at the time of imaging.

As an example, in the imaging device 100 at the time of imaging, the focal distance is 2.0 m, and the depth of field is 0.1 m.

In this case, for example, the first threshold Th1 is set to 0.1 m, and the second threshold Th2 is set to 0.2 m.

A difference between the focal distance and a distance d between a certain vertex (or point) on the 3D avatar AB and the imaging device 100 is defined as a difference dif.

In a case where the difference dif is less than the first threshold Th1, that is, in a case where the distance d is greater than 1.9 m and less than 2.1 m, the subject is in the in-focus state, and it is not necessary to perform the bokeh processing.

Furthermore, in a case where the difference dif is greater than or equal to the first threshold Th1 and less than the second threshold Th2, that is, in a case where the distance d is greater than 1.8 m and less than 1.9 m, or in a case where the distance d is greater than or equal to 2.1 m and less than 2.2 m, the subject slightly deviates from the in-focus state, and processing is performed of adding light bokeh (described as "small bokeh" in the drawing).

Furthermore, in a case where the difference dif is greater than or equal to the second threshold Th2, that is, in a case where the distance d is less than or equal to 1.8 m or greater than or equal to 2.2 m, processing is performed of adding somewhat strong bokeh (described as "large bokeh" in the drawing).

In a case where the distance d between a certain vertex on the 3D avatar AB and the imaging device 100 does not greatly change, that is, in a case where the distance d does not cross the first threshold Th1, the bokeh processing used in the previous frame is used again, so that it is not necessary to perform recalculation for the bokeh.

On the other hand, in a case where the distance d between a certain vertex on the 3D avatar AB and the imaging device 100 changes and crosses the first threshold value Th1 or the second threshold value Th2, for example, in the example of Fig. 31, in a case where the distance d has changed from 1.85 m to 1.95 m, processing is performed of canceling the addition of the small bokeh.

Similarly, in a case where the distance d between a certain vertex on the 3D avatar AB and the imaging device 100 has changed from 1.85 m to 1.75 m, processing is performed of changing the added small bokeh to the large bokeh, that is, adding maximum bokeh.

Note that, in the present example, the first threshold Th1 and the second threshold Th2 are prepared as thresholds, but a degree of bokeh may be adjusted in multiple stages by preparation of more thresholds. Alternatively, only whether or not to add bokeh may be adjusted by use of one threshold.

The superimposition processing unit F25 performs processing of superimposing, on the first subject OBs1, the 3D avatar AB subjected to various effects such as shade addition and bokeh addition. Note that superimposition of the 3D avatar AB may use the billboard technology as described above. That is, the superimposition processing unit F25 may perform superimposition processing by pasting the 3D avatar AB generated by AI to the billboard arranged at the position of the sub-subject OBs.

Note that the above-described various functions by the CPU 71 of the information processing apparatus 1 may be implemented by use of an AI model. For example, the function as the object recognition processing unit F21, the function as the expression recognition processing unit F22, or the like can be implemented by use of an AI model.

### <8-3. Processing example>

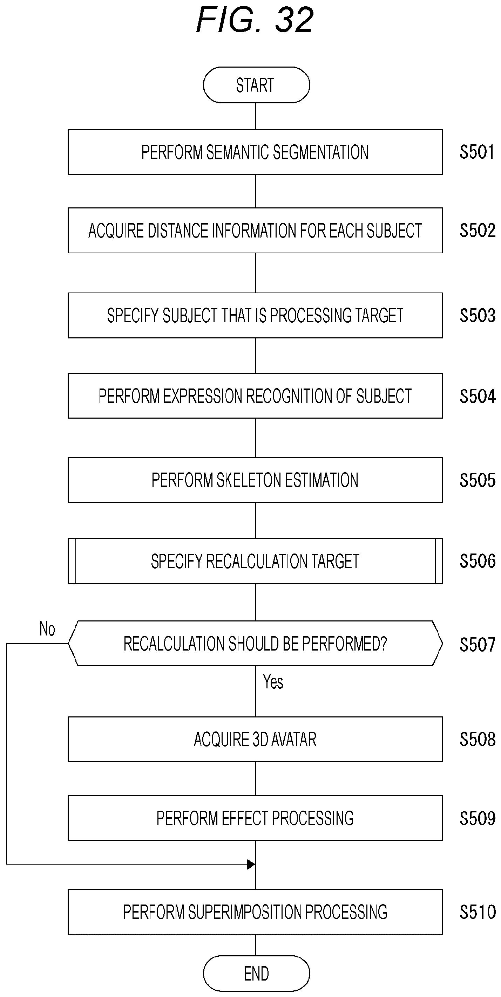

Fig. 32 illustrates an example of processing executed by the CPU 71 to superimpose the 3D avatar AB.

In step S501, the CPU 71 obtains classification information on the subject OB by performing semantic segmentation.

In step S502, the CPU 71 acquires distance information for each subject OB on the basis of the distance image obtained from the ToF sensor 103.

In step S503, the CPU 71 specifies, as the first subject OBs1, the subject OB on which the 3D avatar AB is to be superimposed. In the processing of step S503, it is determined whether or not the subject OB is a person, whether the subject OB is the main subject OBm or the sub-subject OBs in a case where the subject OB is a person, and whether the subject OB is the first subject OBs1 or the second subject OBs2 in a case where the subject OB is the sub-subject OBs. Difference between the first subject OBs1 and the second subject OBs2 depends on, for example, whether a distance to the imaging device 100 is less than the threshold or is greater than or equal to the threshold. Alternatively, selection as the first subject OBs1 or the second subject OBs2 may be performed on the basis of whether or not the subject is oriented in the direction of the imaging device 100.

In step S504, the CPU 71 performs expression recognition of the first subject OBs1.

In step S505, the CPU 71 performs skeleton estimation for the first subject OBs1 by using the distance information.

In step S506, the CPU 71 specifies the first subject OBs1 that is a recalculation target. The first subject OBs1 that is a recalculation target is the first subject OBs1 for which it is necessary to change various effects added to the 3D avatar AB to be superimposed.

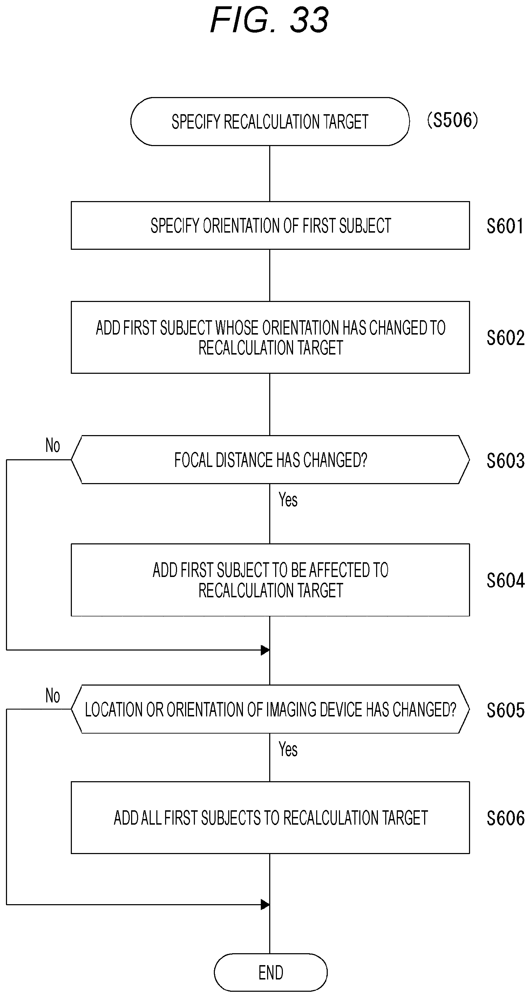

Fig. 33 illustrates an example of the processing in step S506.

In step S601, the CPU 71 specifies, for each first subject OBs1, the orientation. This processing is performed, for example, to determine whether or not the face orientation of the first subject OBs1 has not changed.

In step S602, the CPU 71 adds the first subject OBs1 whose face orientation has changed to the recalculation target.

In step S603, the CPU 71 determines whether or not the focal distance has changed on the basis of information on the imaging device 100 at the time of imaging.

In a case where it is determined that the focal distance has changed, the CPU 71 adds the first subject OBs1 to be affected to the recalculation target in step S604. The first subject OBs1 added here is the first subject OBs1 in which a magnitude relationship with respect to the above-described threshold value of each vertex of a 3D model (polygon) as the 3D avatar AB to be superimposed or a characteristic point (such as an eye, an ear, a mouth, or a nose) in the 3D avatar AB is different from that in the previous frame.

After step S604 or after determining that the focal distance has not changed in step S603, the CPU 71 determines in step S605 whether or not the location or orientation of the imaging device 100 has changed on the basis of an output of the 6DoF sensor 107.

In a case where it is determined that the orientation or location of the imaging device 100 in the current frame has changed with respect to that in the immediate previous frame, the CPU 71 adds all the first subjects OBs1 to the recalculation target in step S606.

On the other hand, in a case where it is determined that the orientation or the location of the imaging device 100 has not changed, the CPU 71 does not execute the processing of step S606.

In this manner, the first subject OBs1 as a recalculation target is appropriately selected, whereby reduction is achieved of a processing load of the information processing apparatus 1.

Referring back to Fig. 32, the description will be continued.

In step S507, the CPU 71 determines whether or not recalculation of the effect processing for the 3D avatar AB should be performed. That is, in a case where the first subject OBs1 determined to be a recalculation target in step S506 is present, it is determined that the recalculation should be performed.

Note that, regardless of a processing result of step S506, it is determined in step S507 that recalculation should be performed for the first subject OBs1 that is located at a distance less than a predetermined distance from the imaging device 100 and for which superimposition of the 3D avatar AB is not performed in the previous frame, and the processing proceeds to step S508.

In a case where it is determined that recalculation should be performed, the CPU 71 acquires the 3D avatar AB in step S508. The 3D avatar AB acquired here is selected according to a result of the expression recognition in step S504 in the first superimposition on the first subject OBs1 on which superimposition is to be performed.

Furthermore, in a case where the 3D avatar AB is already superimposed in the previous frame, the same 3D avatar AB is selected.

In step S509, the CPU 71 performs effect processing on the 3D avatar AB. The effect processing performed here is, as described above, the processing of adding shade, the bokeh processing, or the like. Furthermore, processing of changing the orientation of the 3D avatar AB in accordance with the orientation of the first subject OBs1 can also be regarded as part of the effect processing.

In step S510, the CPU 71 performs processing of superimposing the 3D avatar AB on the first subject OBs1.

### <9. Modifications>

It has been described that, in the estimation processing of the light source location LL, the recalculation determination unit F5 determines whether or not to perform the processing for specifying the light source direction LD and the light source location LL again.

This recalculation may be performed, for example, in conjunction with an illuminance sensor provided in a smartphone as the information processing apparatus 1. That is, the recalculation may be performed in a case where a detection value of the illuminance sensor provided in the smartphone greatly changes, specifically, in a case where an amount of change exceeds a threshold.

Furthermore, in a case where a luminance sensor for backlight is provided in a smartphone as the information processing apparatus 1, recalculation may be performed in a case where a detection value of the luminance sensor greatly changes.

Moreover, in a case where the information processing apparatus 1 is an apparatus such as a smartphone having the configuration of the imaging device 100, a posture change of the imaging device 100 may be detected according to a detection value of the 6DoF sensor 107, and recalculation of the processing for specifying the light source direction LD and the light source location LL may be performed in real time.

In the second example of the effect processing based on the light source location LL, an example has been described in which various types of effect processing are performed on the 3D avatar AB in order to reduce discomfort in a case where the photorealistic 3D avatar AB is superimposed; however, even in a case where a simple image such as an icon is superimposed on the first subject OBs1, it is possible to reduce discomfort by performing the bokeh processing or the like.

Furthermore, in the second example of the effect processing based on the light source location LL, the effect processing has been described as the processing of superimposing the 3D avatar AB on the face portion of the sub-subject OBs in real time in order to support live distribution.

Not limited thereto, the above-described effect processing may be performed on a captured moving image file later, whereby a moving image file in consideration of the portrait right may be generated. That is, the second example of the effect processing based on the light source location is not limited to real-time processing.

### <10. Conclusion>

As described in each of the examples described above, the information processing apparatus 1 includes: the normal vector calculation unit F3 that calculates the normal vector NV at the shininess center ArC located at the center in the shiny area ArS that is an area on the subject OB and is a bright area reflecting light from the light source LS (sun LSs) on the basis of the captured image; and the light source location specifying unit F4 that specifies the light source direction LD that is a direction in which the light source LS (sun LSs) is located on the basis of the normal vector NV.

For example, the light source direction LD with respect to the subject OB can be specified on the basis of the positional relationship between the shininess center ArC and the imaging device 100 that images the subject OB, and the normal vector NV.

As a result, for example, it is possible to estimate the light source direction LD with higher accuracy than the case of roughly estimating in which direction the light source LS (sun LSs) is present in the left-right direction of the subject OB on the basis of a difference in luminance between a left-half area and a right-half area of the subject OB.

Thus, for example, in a case where an effect is superimposed on an image obtained by imaging of the subject OB, it is possible to superimpose an appropriate effect based on the light source direction LD or the like. Furthermore, it is possible to superimpose an effect with realistic feeling without discomfort.

As described with reference to Figs. 4 and 7 to 11, the normal vector calculation unit F3 in the information processing apparatus 1 may calculate the normal vector NV on the basis of distance information between the imaging device 100 that captures the captured image and the periphery of the shiny area ArS.

As a result, a direction in which the shiny area ArS faces can be accurately calculated as the normal vector NV.

As described with reference to Fig. 4 and the like, the information processing apparatus 1 may include the shape estimation unit F1 that estimates the schematic shape of the subject OB, and the normal vector calculation unit F3 may calculate the normal vector NV on the basis of the schematic shape of the subject OB.

As a result, for example, any of a plane, a sphere, and a cylindrical shape is estimated as the schematic shape of the subject OB. Then, the shape estimation unit F1 estimates, for example, the orientation in which the surface faces in the case of the plane, the size (curvature) in the case of the sphere, and the orientation and size (curvature) of the cylindrical shape or a conical shape in the case of the cylindrical shape or the conical shape.

Thus, it is possible to calculate the normal vector NV with higher accuracy on the basis of the schematic shape of the subject OB.

As described with reference to Figs. 12 to 13 and the like, the normal vector calculation unit F3 in the information processing apparatus 1 may calculate the normal vector NV at the shininess center ArC for each of the plurality of shiny areas ArS, and the light source location specifying unit F4 may specify the intersection location of the normal vector NV as the light source location LL.

The plurality of normal vectors NV is calculated, whereby not only the light source direction LD but also the light source location LL can be specified.

As a result, for example, in a case where an effect related to the light source LS (sun LSs) is superimposed, a more appropriate effect can be superimposed.

As described with reference to Figs. 4, 16, and the like, the normal vector calculation unit F3 in the information processing apparatus 1 may perform recalculation of the normal vector NV according to a change in the subject image Go on the captured image.

The change in the subject image Go corresponds to, for example, a case where the position of the subject OB on the captured image has changed, a case where the size of the subject OB has changed even if the position does not change due to a change in the distance to the imaging device 100, or the like.

In this manner, recalculation of the normal vector NV is performed as appropriate in a case where a relative location between the subject OB and the light source LS (sun LSs) has changed, whereby it is possible to perform appropriate effect superimposition on the subject image Go.

As described with reference to Fig. 14 and the like, the normal vector calculation unit F3 in the information processing apparatus 1 may not perform recalculation in a case where the light source LS is the sun LSs.

In a case where the light source LS is the sun LSs, an estimated location of the sun LSs is the infinite point. It is possible to grasp the light source direction LD and the light source location LL for the sun LSs in such a case by appropriately grasping the movement of the subject OB and the movement of the imaging device 100. That is, in a case where the light source LS is the sun LSs, it is not necessary to perform recalculation of the normal vector NV described above, and the like.

As a result, it is possible to achieve reduction of the amount of computation.

As described with reference to Figs. 19 to 25, the information processing apparatus 1 may include the effect processing unit F10 (F20) that performs effect processing based on the specified light source direction LD on the captured image.

The effect processing based on the light source direction LD or the light source location LL is, for example, processing of adding the catch light CL to be superimposed on an eyeball of the subject OB, processing of adding the motion blur MB, or the like. Furthermore, also the backlight correction corresponds to effect processing based on the light source location LL. Furthermore, the backlight correction may be used for generating a 3D model in photogrammetry.

By accurately grasping the light source direction LD and the light source location LL, it is possible to perform such effect processing more appropriately.

As described with reference to Fig. 23 and the like, the effect processing unit F10 (F20) in the information processing apparatus 1 may determine a target area for the effect processing on the basis of a positional relationship among the plurality of subjects OB.

For example, in a case where the positional relationship is such that a part of a certain subject OB is hidden by another subject OB, the target area for the effect processing is limited to an area where occlusion caused by the another subject OB does not occur.

As a result, it is possible to perform natural effect processing without discomfort.

As described with reference to Fig. 30 and the like, the effect processing unit F10 (F20) in the information processing apparatus 1 may perform bokeh processing of an effect to be superimposed on the subject image Go for the subject OB on the basis of distance information between the imaging device 100 that images the subject OB and the subject OB.

For example, in a case where the subject OB is located outside the depth of field, bokeh occurs in the subject OB, and the bokeh processing is also performed on the effect superimposed on the subject OB.

Thus, it is possible to avoid generation of an image with discomfort due to that only the effect stands out with respect to the subject OB.

As described with reference to Figs. 19 to 25, the effect processing unit F10 (F20) in the information processing apparatus 1 may perform blur processing of an effect to be superimposed on the captured image on the basis of at least one of the shutter speed or the moving speed of the subject OB at the time of capturing the captured image.

For example, in the blur processing, in a case where the shutter speed is slow or the moving speed of the subject OB is fast, somewhat strong motion blur MB is superimposed.

As a result, it is possible to perform effect processing with a sense of unity in conjunction with movement of the subject OB.

As described with reference to Fig. 23 and the like, the effect processing unit F10 (F20) in the information processing apparatus 1 may weight the effect to be added in the effect processing on the basis of the excitement degree indicating the degree of excitement estimated for the subject OB.

As a result, for example, a stronger effect or a more flashy effect is superimposed as the imaging site (subject OB) livens up.

Thus, effect processing matching atmosphere of the imaging site can be performed, and the atmosphere of the imaging site can be transmitted to a viewer of the image through the image. That is, it is possible to generate an image with realistic feeling.

As described with reference to Figs. 27 to 33, the effect processing unit F10 (F20) in the information processing apparatus 1 may perform processing of superimposing the 3D avatar AB on the sub-subject OBs that is the subject OB other than the main subject OBm set as an imaging target.

For example, in a case where live distribution is performed, not only the main subject OBm to be imaged but also a sub-subject OBs such as a passerby may appear.

According to the present configuration, by superimposing the 3D avatar AB on the face of the sub-subject OBs, it is possible to generate an image in consideration of the portrait right.

Thus, it is possible to provide an environment in which live distribution can be performed regardless of the location.

As described with reference to Fig. 30 and the like, the effect processing unit F10 (F20) in the information processing apparatus 1 may calculate the depth in the 3D avatar AB and apply bokeh processing according to the depth to the 3D avatar AB.

For example, in a case where an image with a shallow depth of field is created, bokeh may or may not occur in each area for the main subject OBm. Then, in a case where a photorealistic 3D avatar AB is prepared and superimposed on the face of the sub-subject OBs, if the 3D avatar AB without bokeh is always superimposed, the viewer feels a great discomfort, and also the sub-subject OBs is conspicuous, so that there is a possibility that the viewer's consciousness deviates from the main subject OBm that is desired to be noticed.

According to the present configuration, the 3D avatar AB subjected to natural bokeh processing can be superimposed on the sub-subject OBs, and the sub-subject OBs on which the 3D avatar AB is superimposed naturally melts into the background, and it is possible to prevent the viewer's consciousness from deviating.

As described with reference to Fig. 33 and the like, the effect processing unit F10 (F20) in the information processing apparatus 1 may determine whether to perform recalculation for the effect to be superimposed in association with the subject image Go according to the change mode of the subject image Go on the captured image.

As a result, it is possible to appropriately specify the recalculation target.

Furthermore, the distance information by the ToF sensor 103 is used to determine whether or not to perform recalculation without using a focus evaluation value.

The focus evaluation value greatly changes even when only the face orientation changes, whereas the distance information does not greatly change even when the face orientation changes.

Thus, since only those requiring recalculation of the effect to be added to the 3D avatar AB are recalculated, the processing load of the information processing apparatus 1 can be greatly reduced.

As described with reference to Figs. 29, 32, and the like, the effect processing unit F10 (F20) in the information processing apparatus 1 may select the subject OB that is a target for recalculation from among the first subjects OBs1 selected as the subject OB for which skeleton estimation is to be performed.

It is conceivable to superimpose the 3D avatar AB after performing the skeleton estimation for the sub-subject OBs at a location relatively close to the imaging device 100.

In the present configuration, among the sub-subjects OBs appearing in the angle of view, the sub-subject OBs that is present at a close location and for which skeleton estimation is performed is selected as the first subject OBs1, and from among the selected ones, the first subject OBs1 for which recalculation is necessary is selected.

As a result, for example, it is possible to prevent the recalculation processing from being executed even if the sub-subject OBs moves a little that is located far in the angle of view and on which the 3D avatar AB subjected to the bokeh processing is superimposed.

Thus, in a situation where many sub-subjects OBs appear in the angle of view, the processing load of the information processing apparatus 1 can be greatly reduced.

As described with reference to Fig. 33 and the like, the effect processing unit F10 (F20) in the information processing apparatus 1: may determine an effect related to the subject image Go in which a change in the distance to the subject OB (first subject OBs1) or a change in the orientation of the subject OB (first subject OBs1) has occurred as a target of recalculation in a case where the change mode of the subject image Go is a change based on the change in the distance to the subject OB (first subject OBs1) or the change in the orientation of the subject OB (first subject OBs1); may determine an effect related to the subject image Go in which a magnitude relationship with respect to a threshold distance set according to the depth of field changes between the previous frame and the current frame as a target of recalculation in a case where the change mode of the subject image Go is a change based on a change in a zoom state or a focus position at the time of capturing the captured image; and may determine all effects as recalculation targets in a case where the change mode of the subject image Go is a change based on a change in the location or orientation of the imaging device 100 that images the subject OB (first subject OBs1).

As a result, even if the subject image Go for the subject OB (first subject OBs1) has changed, the sub-subject OBs as a recalculation target can be appropriately selected according to the change mode, and it is possible to achieve reduction of the processing load of the information processing apparatus 1.

As described with reference to Fig. 2 and the like, in the information processing apparatus 1, the distance information may be distance information obtained from the ToF sensor 103.

As a result, highly accurate distance information can be obtained for each subject OB.

Thus, the normal vector NV, the light source direction LD, and the light source location LL can be specified with high accuracy.

As described with reference to Fig. 23 and the like, the information processing apparatus 1 may include the effect processing unit F10 (F20) that superimposes an effect on the subject image Go for the subject OB in the captured image, and the effect processing unit F10 (F20) may select the subject OB for which the distance information by the ToF sensor 103 is obtained as the subject OB on which the effect is to be superimposed.

As a result, the subject OB on which the effect is to be superimposed is limited to the subject OB located within a predetermined distance from the imaging device 100.

Thus, it is possible to achieve reduction of the processing load related to the effect processing in the information processing apparatus 1.

As described above, the information processing method performed by the information processing apparatus 1 includes: the processing of calculating the normal vector NV at the shininess center ArC located at the center in the shiny area ArS that is an area on the subject OB and is a bright area reflecting light from the light source LS (sun LSs) on the basis of the captured image; and the processing of specifying the light source direction LD that is a direction in which the light source LS (sun LSs) is located on the basis of the normal vector NV.

Furthermore, the program to be executed by the information processing apparatus 1 includes: the processing of calculating the normal vector NV at the shininess center ArC located at the center in the shiny area ArS that is an area on the subject OB and is a bright area reflecting light from the light source LS (sun LSs) on the basis of the captured image; and the processing of specifying the light source direction LD that is a direction in which the light source LS (sun LSs) is located on the basis of the normal vector NV.

The above-described various functions and effects can be obtained also by such an information processing method or program.

Note that the effects described in the present specification are merely examples and are not restrictive, and other effects may also be produced.

Furthermore, the above-described examples may be combined in any way, and the above-described various functions and effects may be obtained even in a case where various combinations are used.

### <11. Present technology>

Note that the present technology can also adopt the following configurations.
(1) An information processing apparatus including:
   a normal vector calculation unit that calculates, on the basis of a captured image, a normal vector at a shininess center located at the center of a shiny area that is an area on a subject and is a bright area reflecting light from a light source; and
   a light source location specifying unit that specifies, on the basis of the normal vector, a light source direction that is a direction in which the light source is located.
(2) The information processing apparatus according to (1), in which
   the normal vector calculation unit calculates the normal vector on the basis of distance information between an imaging device that captures the captured image and a periphery of the shiny area.
(3) The information processing apparatus according to (2), further including
   a shape estimation unit that estimates a schematic shape of the subject, in which
   the normal vector calculation unit calculates the normal vector on the basis of the schematic shape of the subject.
(4) The information processing apparatus according to any of (1) to (3), in which
   the normal vector calculation unit calculates the normal vector at the shininess center for each of a plurality of the shiny areas, and
   the light source location specifying unit specifies an intersection location of the normal vector as a light source location.
   The information processing apparatus according to any of (1) to (4), in which
   the normal vector calculation unit performs recalculation of the normal vector according to a change in a subject image on the captured image.
(6) The information processing apparatus according to (5), in which
   the normal vector calculation unit does not perform the recalculation in a case where the light source is the sun.
(7) The information processing apparatus according to any of (1) to (6), further including
   an effect processing unit that performs effect processing based on the specified light source direction.
(8) The information processing apparatus according to (7), in which
   the effect processing unit determines a target area for the effect processing on the basis of a positional relationship among a plurality of the subjects.
(9) The information processing apparatus according to any of (7) to (8), in which
   the effect processing unit performs bokeh processing of an effect to be superimposed on a subject image of the subject on the basis of distance information between an imaging device that images the subject and the subject.
(10) The information processing apparatus according to any of (7) to (9), in which
   the effect processing unit performs blur processing of an effect to be superimposed on the captured image on the basis of at least one of a shutter speed or a moving speed of the subject at a time of capturing the captured image.
(11) The information processing apparatus according to any of (7) to (10), in which
   the effect processing unit performs weighting of the effect on the basis of an excitement degree indicating a degree of excitement estimated for the subject.
(12) The information processing apparatus according to any of (7) to (11), in which
   the effect processing unit performs processing of superimposing a 3D avatar on a sub-subject that is a subject other than a main subject set as an imaging target.
(13) The information processing apparatus according to (12), in which
   the effect processing unit calculates a depth in the 3D avatar and applies bokeh processing according to the depth to the 3D avatar.
(14) The information processing apparatus according to any of (7) to (13), in which
   the effect processing unit determines whether to perform recalculation for an effect to be superimposed in relation to a subject image on the captured image according to a change mode of the subject image.
(15) The information processing apparatus according to (14), in which
   the effect processing unit selects a subject that is a target for the recalculation from among first subjects each selected as the subject for which skeleton estimation is to be performed.
(16) The information processing apparatus according to any of (14) to (15), in which
   the effect processing unit
   in a case where the change mode of the subject image is a change based on a change in a distance to the subject or a change in an orientation of the subject, determines an effect related to the subject image in which the change in the distance to the subject or the change in the orientation of the subject has occurred as a target for recalculation,
   in a case where the change mode of the subject image is a change based on a change in a zoom state or a focus position at a time of capturing the captured image, determines an effect related to the subject image for which a magnitude relationship with respect to a threshold distance set according to a depth of field changes between a previous frame and a current frame as a target for recalculation, and
   in a case where the change mode of the subject image is a change based on a change in a location or an orientation of an imaging device that images the subject, determines all effects as targets for recalculation.
(17) The information processing apparatus according to (2), in which
   the distance information is distance information obtained from a ToF sensor.
(18) The information processing apparatus according to (17), further including
   an effect processing unit that superimposes an effect on a subject image of the subject in the captured image, in which
   the effect processing unit selects the subject for which the distance information by the ToF sensor is obtained as a subject on which the effect is to be superimposed.
(19) An information processing method including performing, by an information processing apparatus,
   processing of calculating, on the basis of a captured image, a normal vector at a shininess center located at the center of a shiny area that is an area on a subject and is a bright area reflecting light from a light source, and
   processing of specifying, on the basis of the normal vector, a light source direction that is a direction in which the light source is located.
(20) A program for causing an information processing apparatus to execute:
   processing of calculating, on the basis of a captured image, a normal vector at a shininess center located at the center of a shiny area that is an area on a subject and is a bright area reflecting light from a light source; and
   processing of specifying, on the basis of the normal vector, a light source direction that is a direction in which the light source is located.

### <12. Others>

### <12-1. First example>

The information processing apparatus 1 in the first example of the effect processing based on the light source location LL can also adopt the following configurations.
(1A) An information processing apparatus including:
   an effect processing unit that superimposes an effect on a captured image, in which
   the effect processing unit performs blur processing of the effect on the basis of at least one of a shutter speed at a time of capturing the captured image or a moving speed of a subject at a time of imaging.
(2A) The information processing apparatus according to (1A), in which
   the effect processing unit performs bokeh processing of the effect on the basis of distance information between an imaging device that has captured the captured image and the subject.
(3A) The information processing apparatus according to any of (1A) to (2A), in which
   the effect processing unit performs processing for the effect on the basis of a light source direction specified as a direction in which a light source is located at the time of imaging.
(4A) The information processing apparatus according to (3A), further including:
   a normal vector calculation unit that calculates a normal vector at a shininess center located at the center of a shiny area that is an area on the subject and is a bright area reflecting light from the light source on the basis of the captured image; and
   a light source location specifying unit that specifies the light source direction on the basis of the normal vector.
(5A) The information processing apparatus according to any of (1A) to (4A), in which
   the effect processing unit determines a weight on the basis of an excitement degree indicating a degree of excitement estimated for the subject, and performs processing for the effect by using the weight.
(6A) The information processing apparatus according to (2A), in which
   the distance information is distance information obtained from a ToF sensor.
(7A) The information processing apparatus according to (6A), in which
   the effect processing unit selects the subject for which the distance information by the ToF sensor is obtained as a subject on which the effect is to be superimposed.

### <12-2. Second example>

The information processing apparatus 1 in the second example of the effect processing based on the light source location LL can also adopt the following configurations.
(1B) An information processing apparatus including:
   an effect processing unit that performs processing for an effect to be superimposed on a captured image, in which
   the effect processing unit determines whether or not to perform recalculation of processing for the effect according to a change mode of a subject image on the captured image.
(2B) The information processing apparatus according to (1B), in which
   the effect processing unit selects a subject that is a target for the recalculation from among first subjects set as targets for skeleton estimation.
(3B) The information processing apparatus according to any of (1B) to (2B), in which
   in a case where the change mode of the subject image is a change based on a change in a distance to the subject or a change in an orientation of the subject, the effect processing unit determines a subject related to the subject image in which the change in the distance to the subject or the change in the orientation of the subject has occurred as a target for the recalculation.
(4B) The information processing apparatus according to any of (1B) to (3B), in which
   in a case where the change mode of the subject image is a change based on a change in a zoom state or a focus position at a time of capturing the captured image, the effect processing unit determines a subject related to the subject image for which a magnitude relationship with respect to a threshold distance set according to a depth of field changes between a previous frame and a current frame as a target for the recalculation.
(5B) The information processing apparatus according to any of (1B) to (4B), in which
   in a case where the change mode of the subject image is a change based on a change in a location or an orientation of an imaging device that images the subject, the effect processing unit determines all subjects as targets for the recalculation.

### REFERENCE SIGNS LIST

- 1: Information processing apparatus
- 100: Imaging device
- 103: ToF sensor
- AB: 3D avatar
- ArC: Shininess center
- ArS: Shiny area
- F1: Shape estimation unit
- F3: Normal vector calculation unit
- F4: Light source location specifying unit
- F10: Effect processing unit
- F20: Effect processing unit
- Go: Subject image
- LD: Light source direction
- LL: Light source location
- LS: Light source
- LSs: Sun
- NV: Normal vector
- OB: Subject
- OBm: Main subject
- OBs: Sub-subject
- OBs1: First subject

## Claims

1. An information processing apparatus comprising:
a normal vector calculation unit that calculates, on a basis of a captured image, a normal vector at a shininess center located at a center of a shiny area that is an area on a subject and is a bright area reflecting light from a light source; and
a light source location specifying unit that specifies, on a basis of the normal vector, a light source direction that is a direction in which the light source is located.

2. The information processing apparatus according to claim 1, wherein
the normal vector calculation unit calculates the normal vector on a basis of distance information between an imaging device that captures the captured image and a periphery of the shiny area.

3. The information processing apparatus according to claim 2, further comprising
a shape estimation unit that estimates a schematic shape of the subject, wherein
the normal vector calculation unit calculates the normal vector on a basis of the schematic shape of the subject.

4. The information processing apparatus according to claim 1, wherein
the normal vector calculation unit calculates the normal vector at the shininess center for each of a plurality of the shiny areas, and
the light source location specifying unit specifies an intersection location of the normal vector as a light source location.

5. The information processing apparatus according to claim 1, wherein
the normal vector calculation unit performs recalculation of the normal vector according to a change in a subject image on the captured image.

6. The information processing apparatus according to claim 5, wherein
the normal vector calculation unit does not perform the recalculation in a case where the light source is the sun.

7. The information processing apparatus according to claim 1, further comprising
an effect processing unit that performs effect processing based on the specified light source direction.

8. The information processing apparatus according to claim 7, wherein
the effect processing unit determines a target area for the effect processing on a basis of a positional relationship among a plurality of the subjects.

9. The information processing apparatus according to claim 7, wherein
the effect processing unit performs bokeh processing of an effect to be superimposed on a subject image of the subject on a basis of distance information between an imaging device that images the subject and the subject.

10. The information processing apparatus according to claim 7, wherein
the effect processing unit performs blur processing of an effect to be superimposed on the captured image on a basis of at least one of a shutter speed or a moving speed of the subject at a time of capturing the captured image.

11. The information processing apparatus according to claim 7, wherein
the effect processing unit performs weighting of an effect to be added in the effect processing on a basis of an excitement degree indicating a degree of excitement estimated for the subject.

12. The information processing apparatus according to claim 7, wherein
the effect processing unit performs processing of superimposing a 3D avatar on a sub-subject that is a subject other than a main subject set as an imaging target.

13. The information processing apparatus according to claim 12, wherein
the effect processing unit calculates a depth in the 3D avatar and applies bokeh processing according to the depth to the 3D avatar.

14. The information processing apparatus according to claim 7, wherein
the effect processing unit determines whether to perform recalculation for an effect to be superimposed in relation to a subject image on the captured image according to a change mode of the subject image.

15. The information processing apparatus according to claim 14, wherein
the effect processing unit selects a subject that is a target for the recalculation from among first subjects each selected as the subject for which skeleton estimation is to be performed.

16. The information processing apparatus according to claim 14, wherein
the effect processing unit
in a case where the change mode of the subject image is a change based on a change in a distance to the subject or a change in an orientation of the subject, determines an effect related to the subject image in which the change in the distance to the subject or the change in the orientation of the subject has occurred as a target for recalculation,
in a case where the change mode of the subject image is a change based on a change in a zoom state or a focus position at a time of capturing the captured image, determines an effect related to the subject image for which a magnitude relationship with respect to a threshold distance set according to a depth of field changes between a previous frame and a current frame as a target for recalculation, and
in a case where the change mode of the subject image is a change based on a change in a location or an orientation of an imaging device that images the subject, determines all effects as targets for recalculation.

17. The information processing apparatus according to claim 2, wherein
the distance information is distance information obtained from a ToF sensor.

18. The information processing apparatus according to claim 17, further comprising
an effect processing unit that superimposes an effect on a subject image of the subject in the captured image, wherein
the effect processing unit selects the subject for which the distance information by the ToF sensor is obtained as a subject on which the effect is to be superimposed.

19. An information processing method comprising performing, by an information processing apparatus,
processing of calculating, on a basis of a captured image, a normal vector at a shininess center located at a center of a shiny area that is an area on a subject and is a bright area reflecting light from a light source, and
processing of specifying, on a basis of the normal vector, a light source direction that is a direction in which the light source is located.

20. A program for causing an information processing apparatus to execute:
processing of calculating, on a basis of a captured image, a normal vector at a shininess center located at a center of a shiny area that is an area on a subject and is a bright area reflecting light from a light source; and
processing of specifying, on a basis of the normal vector, a light source direction that is a direction in which the light source is located.
